# EUROPEAN PATENT SPECIFICATION

(11) **EP 4 290 760 B1**
(45) Date of publication and mention of the grant of the patent: **11.02.2026**
(21) Application number: 23178516.3
(22) Date of filing: 09.06.2023
(51) Int. Cl.: H02P 29/60, H02P 29/02, H02K 9/19, H02K 11/25

(54) **DEVICE AND METHOD FOR ESTIMATING INTERNAL TEMPERATURE OF ELECTRIC MOTOR AND CONTROL DEVICE FOR ELECTRIC MOTOR**
VORRICHTUNG UND VERFAHREN ZUR SCHÄTZUNG DER INNENTEMPERATUR EINES ELEKTROMOTORS UND STEUERUNGSVORRICHTUNG FÜR EINEN ELEKTROMOTOR
DISPOSITIF ET PROCÉDÉ D'ESTIMATION DE TEMPÉRATURE INTERNE DE MOTEUR ÉLECTRIQUE ET DISPOSITIF DE COMMANDE POUR MOTEUR ÉLECTRIQUE

(30) Priority: 10.06.2022 JP 2022094698
(43) Date of publication of application: 13.12.2023
(73) Proprietor: TOYOTA JIDOSHA KABUSHIKI KAISHA, Toyota-shi, Aichi-ken, 471 8571 (JP)
(72) Inventor: TABUCHI, Kenta, Toyota-shi 471-8571 (JP); OKAZAKI, Sho, Toyota-shi 471-8571 (JP); KATO, Hiroki, Toyota-shi 471-8571 (JP)
(74) Representative: D Young & Co LLP

(56) References cited:
- WO-A1-2020/136765
- CN-A- 111 835 117
- CN-A- 114 547 939
- JP-B2- 5 908 741
- US-A1- 2012 007 532
- SUN TIANFU ET AL: "Active Motor Rotor Temperature Management Based on One-Node Thermal Network Model Predictive Control", IEEE TRANSACTIONS ON POWER ELECTRONICS, INSTITUTE OF ELECTRICAL AND ELECTRONICS ENGINEERS, USA, vol. 35, no. 10, 10 March 2020 (2020-03-10), pages 11213 - 11221, XP011796578, ISSN: 0885-8993, [retrieved on 20200629], DOI: 10.1109/TPEL.2020.2979824
- SHI YANWEN ET AL: "Transient 3-D Lumped Parameter and 3-D FE Thermal Models of a PMASynRM Under Fault Conditions With Asymmetric Temperature Distribution", IEEE TRANSACTIONS ON INDUSTRIAL ELECTRONICS, IEEE SERVICE CENTER, PISCATAWAY, NJ, USA, vol. 68, no. 6, 21 April 2020 (2020-04-21), pages 4623 - 4633, XP011838694, ISSN: 0278-0046, [retrieved on 20210218], DOI: 10.1109/TIE.2020.2988224
- ZHANG BIN ET AL: "Thermal model of totally enclosed water-cooled permanent magnet synchronous machines for electric vehicle applications", 2014 INTERNATIONAL CONFERENCE ON ELECTRICAL MACHINES (ICEM), IEEE, 2 September 2014 (2014-09-02), pages 2205 - 2211, XP032687565, DOI: 10.1109/ICELMACH.2014.6960490
- YU HE ET AL: "Thermal Analysis of Interior Permanent Magnet Synchronous Motor with PWM Voltage Excitation", 2021 24TH INTERNATIONAL CONFERENCE ON ELECTRICAL MACHINES AND SYSTEMS (ICEMS), KIEE & EMECS, 31 October 2021 (2021-10-31), pages 1305 - 1310, XP034051460, DOI: 10.23919/ICEMS52562.2021.9634589

## Description

### BACKGROUND OF THE INVENTION

### Field of the Invention

The present invention relates to a technique estimating an internal temperature of an electric motor.

### Description of the Related Art

There has been known a device for estimating an internal temperature of an electric motor that includes, within a case, a stator core extending cylindrically in the direction of an axis and around which a coil is wound, and a rotor arranged rotatably around the axis. An example thereof is described in JP2014107956A.

In JP2014107956A, the internal temperature of the electric motor is estimated based on the heat generation quantity of each of elements of the electric motor, the heat transfer between the elements of the electric motor, the quantity of heat release from the case to outside air, and the quantity of heat release from the case to cooling water, in accordance with the heat release path from the electric motor. By the way, some electric motors are of a type where the electric motor is cooled by cooling liquid within the case. In such a type, however, the heat release path is hard to identify, rendering it difficult to estimate the internal temperature of the electric motor at high accuracy by the estimation device described in JP2014107956A.
CN111835117A discloses a motor assembly and vehicle.
SUN TIANFU ET AL, "Active Motor Rotor Temperature Management Based on One-Node Thermal Network Model Predictive Control", IEEE TRANSACTIONS ON POWER ELECTRONICS, INSTITUTE OF ELECTRICAL AND ELECTRONICS ENGINEERS, USA, vol. 35, no. 10, doi10.1109/TPEL.2020.2979824, ISSN 0885-8993, (20200310), pages 11213 - 11221.
US2012007532A1 discloses Rotor Temperature Estimation and Motor Control Torque Limiting for Vector-Controlled AC Induction Motors.

The object indicated above is achieved according to the following aspects of the present invention.

### SUMMARY OF THE INVENTION

Particular aspects of the invention are set out in the appended claims. The present invention was conceived against the background of the above circumstances and an object thereof is to provide a device and a method for estimating an internal temperature of an electric motor, and a control device for an electric motor, capable of reducing the calculation load in the device for estimating an internal temperature of an electric motor while suppressing lowering in the estimation accuracy of the internal temperature of the electric motor even in the case where the electric motor is cooled by cooling liquid within the case.

According to a first aspect of the invention, there is provided a device for estimating an internal temperature of an electric motor, the electric motor having a stator core extending cylindrically in a direction of an axis and around which a coil is wound, a rotor arranged rotatably around the axis, and a case that houses the stator core and the rotor, the coil being cooled by a first cooling liquid in the case, the device estimating the internal temperature by using a thermal circuit that regards a temperature of the first cooling liquid after heat reception from the coil as a first temperature equal to a temperature of the case.

According to a second aspect of the invention, in the device for estimating an internal temperature of an electric motor of the first aspect of the invention, the thermal circuit undergoes at least one of: simplification regarding the stator core and the coil as symmetrical with respect to a central portion of the stator core in the axis direction; simplification regarding a temperature within the rotor as uniform; simplification regarding a heat transfer via air within the case as null between the rotor and the first cooling liquid; and simplification regarding a heat transfer via air outside the case as null between the case and outside air.

According to a third aspect of the invention, in the device for estimating an internal temperature of an electric motor of the first or the second aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid.

According to a fourth aspect of the invention, the device for estimating an internal temperature of an electric motor of the third aspect of the invention comprises, (a) a heat generation quantity calculation portion that calculates a heat generation quantity of each element in the thermal circuit, based on a rotation number of the electric motor and an output torque of the electric motor at an estimate point of time; (b) a heat transfer quantity calculation portion that calculates, using the thermal circuit, a heat transfer quantity of the each element, based on the boundary conditions and a temperature of the each element at a most-recent point of time that is a point of time anterior to the estimate point of time by a previously defined predetermined term; (c) a temperature change quantity calculation portion that calculates a temperature change quantity of the each element in a term between the most-recent point of time and the estimate point of time, based on the heat generation quantity of the each element, the heat transfer quantity, and a previously defined heat capacity; and (d) a temperature estimate portion that estimates the internal temperature at the estimate point of time, based on a temperature of the each element at the most-recent point of time and the temperature change quantity of the each element.

According to a fifth aspect of the invention, the device for estimating an internal temperature of an electric motor of the fourth aspect of the invention comprises, an initial temperature setting portion that, when the electric motor is switched from a stop state to an operation state, initially sets a temperature of the each element, based on a first relationship defined in advance experimentally or by design between a temperature of the each element at a stop point of time at which the electric motor enters the stop state and a term until the electric motor is switched to the operation state from the stop state, and an initial temperature of the each element at an operation start point of time at which the electric motor is switched to the operation state.

According to a sixth aspect of the invention, the device for estimating an internal temperature of an electric motor of the fourth aspect of the invention comprises, an initial temperature setting portion that, when the electric motor is switched from a stop state to an operation state, initially sets a temperature of the each element, based on a second relationship defined in advance experimentally or by design between a temperature of the each element at a stop point of time at which the electric motor enters the stop state and a temperature lowering quantity of at least one of the first temperature and the second temperature in a term until the electric motor is switched to the operation state from the stop state, and an initial temperature of the each element at an operation start point of time at which the electric motor is switched to the operation state.

In the seventh aspect of the invention, there is provided a control device for an electric motor, the electric motor having a stator core extending cylindrically in a direction of an axis and around which a coil is wound, a rotor arranged rotatably around the axis, and a case that houses the stator core and the rotor, the coil being cooled by a first cooling liquid in the case, the control device executing an output restriction of the electric motor in case that an internal temperature of the electric motor estimated using a thermal circuit is greater than or equal to a previously defined predetermined judgment temperature, the thermal circuit regarding a temperature of the first cooling liquid after heat reception from the coil as a first temperature equal to a temperature of the case.

According to an eighth aspect of the invention, in the device for estimating an internal temperature of an electric motor of the seventh aspect of the invention, the thermal circuit undergoes at least one of: simplification regarding the stator core and the coil as symmetrical with respect to a central portion of the stator core in the axis direction; simplification regarding a temperature within the rotor as uniform; simplification regarding a heat transfer via air within the case as null between the rotor and the first cooling liquid; and simplification regarding a heat transfer via air outside the case as null between the case and outside air.

According to a ninth aspect of the invention, in the device for estimating an internal temperature of an electric motor of the seventh or the eighth aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid.

According to a tenth aspect of the invention, in the method for estimating an internal temperature of an electric motor, the electric motor having a stator core extending cylindrically in a direction of an axis and around which a coil is wound, a rotor arranged rotatably around the axis, and a case that houses the stator core and the rotor, the coil being cooled by a first cooling liquid in the case, the method comprising: estimating the internal temperature by using a thermal circuit that regards a temperature of the first cooling liquid after heat reception from the coil as a first temperature equal to a temperature of the case.

According to an eleventh aspect of the invention, in the method for estimating an internal temperature of an electric motor of the tenth aspect of the invention, the thermal circuit undergoes at least one of: simplification regarding the stator core and the coil as symmetrical with respect to a central portion of the stator core in the axis direction; simplification regarding a temperature within the rotor as uniform; simplification regarding a heat transfer via air within the case as null between the rotor and the first cooling liquid; and simplification regarding a heat transfer via air outside the case as null between the case and outside air.

According to a twelfth aspect of the invention, the method for estimating an internal temperature of an electric motor of the tenth or the eleventh aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid.

According to a thirteenth aspect of the invention, the method for estimating an internal temperature of an electric motor of the twelfth aspect of the invention, the method comprises; (a) calculating a heat generation quantity of each element in the thermal circuit, based on a rotation number of the electric motor and an output torque of the electric motor at an estimate point of time; (b) calculating, using the thermal circuit, a heat transfer quantity of the each element, based on the boundary conditions and a temperature of the each element at a most-recent point of time that is a point of time anterior to the estimate point of time by a previously defined predetermined term; (c) calculating a temperature change quantity of the each element in a term between the most-recent point of time and the estimate point of time, based on the heat generation quantity of the each element, the heat transfer quantity, and a previously defined heat capacity; and (d) estimating the internal temperature at the estimate point of time, based on a temperature of the each element at the most-recent point of time and the temperature change quantity of the each element.

According to the device for estimating an internal temperature of an electric motor of first aspect of the invention, the device estimates the internal temperature by using a thermal circuit that regards a temperature of the first cooling liquid after heat reception from the coil as a first temperature equal to a temperature of the case. In the thermal circuit for use in estimating the internal temperature of the electric motor, the thermal circuit regards a temperature of the first cooling liquid after heat reception from the coil as a first temperature equal to a temperature of the case, thus simplification of the thermal circuit is achieved. Thus, even though the electric motor is cooled by the first cooling liquid within the case, it is possible to suppress lowering in the estimate accuracy of the internal temperature of the electric motor and to reduce the calculation load of the estimation device of the internal temperature of the electric motor.

According to the device for estimating an internal temperature of an electric motor of the second aspect of the invention, in the first aspect of the invention, the thermal circuit undergoes at least one of: simplification regarding the stator core and the coil as symmetrical with respect to a central portion of the stator core in the axis direction; simplification regarding a temperature within the rotor as uniform; simplification regarding a heat transfer via air within the case as null between the rotor and the first cooling liquid; and simplification regarding a heat transfer via air outside the case as null between the case and outside air. In case of performing at least one of these simplifications in the thermal circuit described in the second aspect of the invention, as compared with the case not performing these simplifications, the calculation load in the estimation device of internal temperature of the electric motor can further be reduced.

According to the device for estimating an internal temperature of an electric motor of the third aspect of the invention, in the first or the second aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid. By estimating the magnet temperature with the boundary conditions using the thermal circuit, degradation in the estimate accuracy of the internal temperature is suppressed.

According to the device for estimating an internal temperature of an electric motor of the fourth aspect of the invention, in the third aspect of the invention, the device comprises; (a) a heat generation quantity calculation portion that calculates a heat generation quantity of each element in the thermal circuit, based on a rotation number of the electric motor and an output torque of the electric motor at an estimate point of time; (b) a heat transfer quantity calculation portion that calculates, using the thermal circuit, a heat transfer quantity of the each element, based on the boundary conditions and a temperature of the each element at a most-recent point of time that is a point of time anterior to the estimate point of time by a previously defined predetermined term; (c) a temperature change quantity calculation portion that calculates a temperature change quantity of the each element in a term between the most-recent point of time and the estimate point of time, based on the heat generation quantity of the each element, the heat transfer quantity, and a previously defined heat capacity; and (d) a temperature estimate portion that estimates the internal temperature at the estimate point of time, based on a temperature of the each element at the most-recent point of time and the temperature change quantity of the each element. By virtue of including the heat generation quantity calculation portion, the heat transfer quantity calculation portion, the temperature change quantity calculation portion, the temperature estimate portion, and the electric motor control portion, the internal temperature can be estimated even in the case where the electric motor is cooled by the first cooling liquid within the case.

According to the device for estimating an internal temperature of an electric motor of the fifth aspect of the invention, in the fourth aspect of the invention, when the electric motor is switched from a stop state to an operation state, initially sets a temperature of the each element, based on a first relationship defined in advance experimentally or by design between a temperature of the each element at a stop point of time at which the electric motor enters the stop state and a term until the electric motor is switched to the operation state from the stop state, and an initial temperature of the each element at an operation start point of time at which the electric motor is switched to the operation state. In case that the electric motor is switched from the stop state to the operation state, by performing such initial setting of the initial temperature of each element by the initial temperature setting portion even when the electric motor is switched from the stopped state to the operation state, the internal temperature estimated by the estimation device easily achieves faster convergence to the actual temperature, as compared with the case not performing the initial setting. This leads to improvement in the estimate accuracy of the internal temperature in the estimation device.

According to the device for estimating an internal temperature of an electric motor of the sixth aspect of the invention, in the fourth aspect of the invention, when the electric motor is switched from a stop state to an operation state, initially sets a temperature of the each element, based on a second relationship defined in advance experimentally or by design between a temperature of the each element at a stop point of time at which the electric motor enters the stop state and a temperature lowering quantity of at least one of the first temperature and the second temperature in a term until the electric motor is switched to the operation state from the stop state, and an initial temperature of the each element at an operation start point of time at which the electric motor is switched to the operation state. This presents similar effects to the estimating device of the internal temperature of the electric motor described in the fifth invention.

According to the control device for an electric motor of the seventh aspect of the invention, the electric motor having a stator core extending cylindrically in a direction of an axis and around which a coil is wound, a rotor arranged rotatably around the axis, and a case that houses the stator core and the rotor, the coil being cooled by a first cooling liquid in the case, the control device executing an output restriction of the electric motor in case that an internal temperature of the electric motor estimated using a thermal circuit is greater than or equal to a previously defined predetermined judgment temperature, the thermal circuit regarding a temperature of the first cooling liquid after heat reception from the coil as a first temperature equal to a temperature of the case. This presents similar effects to those of the electronic control device of the electric motor of the invention, same as that described in the first aspect of the invention, estimating the internal temperature of the electric motor immediately with degradation in the estimate accuracy is suppressed. In the case where lowering in the estimate accuracy of the internal temperature is suppressed, as compared with the case not suppressed, it is possible to avoid degradation in performance of the electric motor while securing the output performance of the electric motor by setting up higher the judgment temperature defined to avoid the performance degradation of the electric motor, or to maximize the output performance of the electric motor while reducing the cost by employing the permanent magnet of a grade having a relatively low heat resistance.

According to the control device for an electric motor of the eighth aspect of the invention, in the seventh aspect of the invention, simplification of the thermal circuit is the same as that described in the second aspect of the invention. This presents similar effects to those of the electronic control device of the electric motor, same as that described in the second aspect of the invention.

According to the control device for an electric motor of the ninth aspect of the invention, in the seventh or the eighth aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid. This presents similar effects to those of the estimation method of the internal temperature of the electric motor, same as that described in the third aspect of the invention.

According to the method for estimating an internal temperature of the electric motor of the tenth aspect of the invention, the method comprises estimating the internal temperature by using a thermal circuit that regards a temperature of the first cooling liquid after heat reception from the coil as a first temperature equal to a temperature of the case. This presents similar effects to those of the estimation method of the internal temperature of the electric motor, same as that described in the first aspect of the invention.

According to the method for estimating an internal temperature of the electric motor of the eleventh aspect of the invention, the method comprises the simplification of the thermal circuit the same as that described in the second aspect of the invention. This presents similar effects to those of the estimation method of the internal temperature of the electric motor, same as that described in the second aspect of the invention.

According to the method for estimating an internal temperature of the electric motor of the twelfth aspect of the invention, in the method of the tenth or the eleventh aspect of the invention, the internal temperature is estimated using the thermal circuit with boundary conditions including the first temperature and a second temperature that is at least one of a temperature of the coil, a temperature of the first cooling liquid before heat reception from the coil, and a temperature of a second cooling liquid before heat reception from the first cooling liquid, the second cooling liquid cooling the first cooling liquid. This presents similar effects to those of the estimation method of the internal temperature of the electric motor, same as that described in the third aspect of the invention.

According to the method for estimating an internal temperature of the electric motor of the thirteenth aspect of the invention, in the method of the twelfth aspect of the invention, the method comprises; (a) calculating a heat generation quantity of each element in the thermal circuit, based on a rotation number of the electric motor and an output torque of the electric motor at an estimate point of time; (b) calculating, using the thermal circuit, a heat transfer quantity of the each element, based on the boundary conditions and a temperature of the each element at a most-recent point of time that is a point of time anterior to the estimate point of time by a previously defined predetermined term; (c) calculating a temperature change quantity of the each element in a term between the most-recent point of time and the estimate point of time, based on the heat generation quantity of the each element, the heat transfer quantity, and a previously defined heat capacity; and (d) estimating the internal temperature at the estimate point of time, based on a temperature of the each element at the most-recent point of time and the temperature change quantity of the each element. This presents similar effects to those of the estimation method of the internal temperature of the electric motor, same as that described in the fourth aspect of the invention.

Fig. 1 is a schematic configuration diagram of an electric motor and a cooling circuit, according to the first embodiment of the present invention. This figure shows the electric motor in cross section through an axis.
Fig. 2 is a schematic configuration diagram of an electric motor and a cooling circuit, according to the first embodiment of the present invention. This figure shows the electric motor seen from the direction of an arrow D of Fig. 1.
Fig. 3 shows an example of a thermal circuit before simplification, for use in estimating a permanent magnet temperature embedded in the rotor of the electric motor.
Fig. 4 is a function block diagram of an example of the simplified thermal circuit and an electronic control device that estimates the temperature of the permanent magnet embedded in the rotor of the electric motor, according to the first embodiment of the present invention.
Fig. 5 shows a temperature change of a certain element as a representative of the elements of the thermal circuit shown in Fig. 4.
Fig. 6 shows an example of an initial temperature estimate function used in a method of setting up the initial temperature of a certain element as a representative of the elements of the thermal circuit shown in Fig. 4.
Fig. 7 is an example of a flowchart explaining control actions of the electronic control device shown in Fig. 4.
Fig. 8 shows an example of an initial temperature estimate function for use in a setting method of a certain element as a representative of elements of the thermal circuit, according to a second embodiment of the present invention.
Fig. 9 is a function block diagram of an example of the simplified thermal circuit, and the electronic control device that estimates the temperature of the permanent magnet embedded in the rotor of the electric motor, according to a third embodiment of the present invention.
Fig. 10 is a function block diagram of an example of the simplified thermal circuit, and the electronic control device that estimates the temperature of the permanent magnet embedded in the rotor of the electric motor, according to a fourth embodiment of the present invention.

### DESCRIPTION OF THE PREFERRED EMBODIMENTS

Embodiments of the present invention will hereinafter be described in detail with reference to the drawings. In the following embodiments, the figures are appropriately simplified or modified, and the dimension ratios, shapes, etc. of portions are not necessarily correctly drawn. The second to fourth embodiments have approximately the same configuration as that of the preceding first embodiment and therefore will mainly be described about different portions. Substantially common portions in function to the first embodiment will be designated by the same reference numerals and description thereof will appropriately be omitted.

### First Embodiment

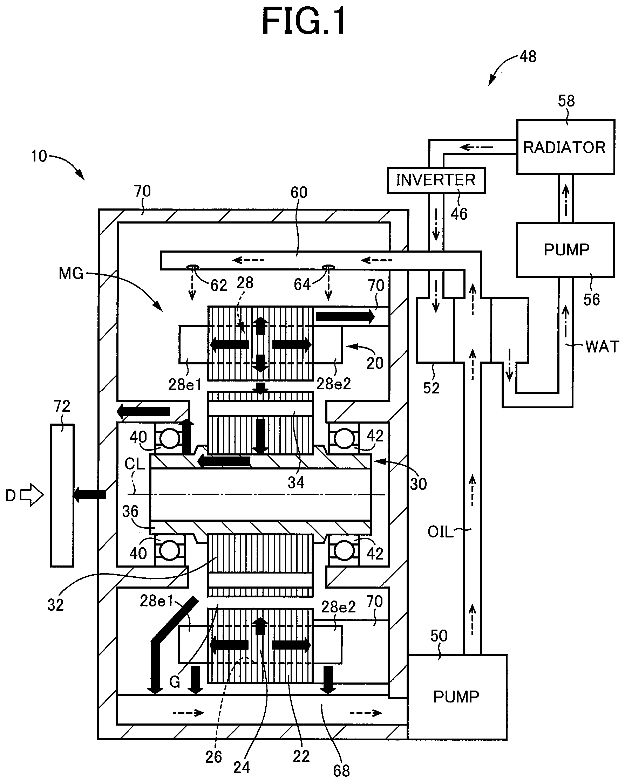

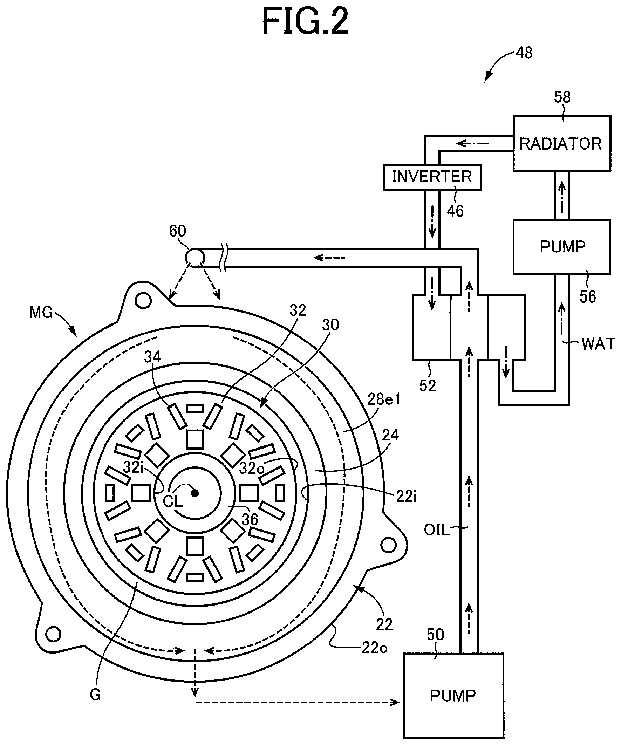

Figs. 1 and 2 are schematic configuration diagrams of an electric motor MG and a cooling circuit 48, according to the first embodiment of the present invention. Fig. 1 shows the electric motor MG in cross section through an axis CL, while Fig. 2 shows the electric motor MG seen from the direction of an arrow D of Fig. 1. In Fig. 2, a case 70 is not shown. The axis CL is a rotational center line of the electric motor MG, and axis CL direction is the direction of extension of the axis CL.

The electric motor MG is a so-called motor generator i.e. a rotating electrical machine functioning as both a motor and a generator, mounted on a vehicle 10 such as e.g. a hybrid vehicle, an electric vehicle, etc. The motor generator MG is, for example, a driving force source for running of the vehicle 10. The motor generator MG is, for example, a widely known synchronous electric motor i.e. an interior permanent magnet motor (IPM motor) having a structure in which a permanent magnet 34 is arranged embedded) within the interior of a rotor 30.

The electric motor MG includes a stator 20 and the rotor 30. The electric motor MG is housed in the case 70 that is a non-rotating member.

The stator 20 includes a stator core 22 and a coil 28 wound around the stator core 22. The stator core 22 is composed of e.g. a plurality of electromagnetic steel sheets laminated in the axis CL direction. The stator core 22 is of a cylindrical shape centered on the axis CL. The stator core 22 has on its inner periphery 22i a plurality of grooves i.e. slots 26 arranged at equal angular intervals and extending along the axis CL, the slots 26 having a depth toward the outer peripheral side in the radial direction of the stator core 22. A tooth 24 is formed between the slots 26 adjacent to each other. The coil 28 is wound in each of the slots 26 to allow the tooth 24 between the slots 26 to be an electromagnet. Coil ends 28e are portions of the coil 28 that protrude in the axis CL direction from the stator core 22. In the axis CL direction, the coil ends 28e include a one-end-side coil end 28e1 lying on one end side and an other-end-side coil end 28e2 laying on the other end side. A central portion in the axis CL direction of the coil 28 within the slots 26 will be referred to as intra-slot coil 28c. The coil ends 28e are each of an annular shape centered on the axis CL. When e.g. three-phase alternating current is passed through the coil 28, the tooth 24 becomes an electromagnet to generate a rotating magnetic field.

The rotor 30 is arranged rotatably around the axis CL on the inner peripheral side of the stator core 22. The rotor 30 includes a rotor core 32, the permanent magnet 34 embedded in the interior of the rotor core 32, and a rotor shaft 36. The rotor core 32 is composed of e.g. a plurality of electromagnetic steel sheets laminated in the axis CL direction and is of a cylindrical shape centered on the axis CL. The inner periphery 22i of the stator core 22 and an outer periphery 32o of the rotor core 32 confront each other via a gap G in the radial direction of the stator core 22. The permanent magnet 34 is a sintered magnet made of a magnetic material such as e.g. neodymium iron magnet or a rare earth cobalt magnet. The rotor shaft 36 is inserted into and coupled to an inner periphery 32i of the rotor core 32 rotatably around the axis CL. The rotor shaft 36 is supported by the case 70 via a bearing 40 arranged on one end side and a bearing 42 arranged on the other end side in the axis CL direction. The rotor shaft 36 is made of e.g. steel. The rotor 30 is made rotatable by a rotating magnetic field that the stator 20 generates.

The case 70 houses within its interior the electric motor MG, the bearings 40 and 42, and a cooling oil flow path 60 and fixes the stator core 22 and the cooling oil flow path 60 coupled to the case 70. The case 70 is made of aluminum alloy formed from e.g. cast aluminum material having a low aluminum purity, and has a sufficiently high thermal conductivity k[W/(m·K)] as compared with air within the case 70.

The cooling oil flow path 60 is arranged, for example, parallel to the axis CL directly above the stator 20 on a vertical line extending through the axis CL, with cooling oil OIL flowing through the interior of the cooling oil flow path 60. The cooling oil OIL is, for example, automatic transmission fluid (ATF). Discharge apertures 62 and 64 are disposed on the cooling oil flow path 60. The cooling oil flow path 60 has, on its bottom side in the vertical line direction, two discharge apertures 62 and two discharge apertures 64 formed in the circumferential direction thereof. The discharge apertures 62 and 64 drip the cooling oil OIL on the one-end-side coil end 28e1 and the other-end-side coil end 28e2, respectively. Thus, the one-end-side coil end 28e1 and the other-end-side coil end 28e2 are cooled in the same manner by the cooling oil OIL dripped from the discharge apertures 62 and 64. The cooling oil OIL is equivalent to "first cooling liquid" of the present invention.

The dripped cooling oil OIL flows down from the upper portions of the annular coil ends 28e along the circumferential direction on the coil ends 28e. The flowing-down cooling oil OIL accumulates in an oil reservoir 68 disposed at the lower portion within the case 70. In this manner, the coil 28 is cooled by the cooling oil OIL dripped from the discharge apertures 62 and 64 within the case 70.

A radiator 58 is a heat exchanger that cools down cooling water WAT by outside air 72 via air within an engine room lying exterior to the case 70. The cooling water WAT is, for example, long life coolant (LLC) containing ethylene glycol, etc. added to water. A pump 56 refluxes the cooling water WAT flowing out of an oil cooler 52 to the oil cooler 52 by way of the radiator 58 and an inverter 46. The cooling water WAT is equivalent to "second cooling liquid" of the present invention, and air within the engine room is equivalent to "air outside the case" of the present invention.

The oil cooler 52 is a heat exchanger that cools down the cooling oil OIL with the cooling water WAT. Heat exchange with the oil cooler 52 lowers a post-heat-reception oil temperature THₒᵢₗ₂ [K] that is an oil temperature of the cooling oil OIL after receiving heat from the coil 28, to a pre-heat-reception oil temperature THₒᵢₗ₁[K] (<THₒᵢₗ₂) that is an oil temperature of the cooling oil OIL before receiving heat from the coil 28. Heat exchange with the oil cooler 52 raises a pre-heat-exchange water temperature TH_{wat1} [K] that is a water temperature of the cooling water WAT before heat exchanging by the oil cooler 52, to a post-heat-exchange water temperature TH_{wat2} [K] (>TH_{wat1}) that is a water temperature of the cooling water WAT after heat exchanging by the oil cooler 52. The pre-heat-reception oil temperature THₒᵢₗ₁, the post-heat-reception oil temperature THₒᵢₗ₂, and the pre-heat-exchange water temperature TH_{wat1} are equivalent to "temperature of the first cooling liquid before receiving heat from the coil", "temperature of the first cooling liquid after receiving heat from the coil", and "temperature of the second cooling liquid before receiving heat from the first cooling liquid", respectively, of the present invention.

The cooling circuit 48 includes a flow channel for cooling oil OIL circulating between the cooling oil flow path 60 and the oil reservoir 68, the oil cooler 52, a pump 50, a flow channel for cooling water WAT circulating between the oil cooler 52 and the radiator 58, the radiator 58, and the pump 56.

From here, thermal conduction, that is, heat release and heat reception will be described. In Figs. 1 and 2, the directions of thermal conduction in the electric motor MG are indicated by thick black arrows. In the cooling circuit 48, the directions of flow of the cooling oil OIL and the cooling water WAT are indicated by dashed arrows and chain-dotted arrows, respectively.

For example, heat generated through the intra-slot coil 28c in the axis CL direction is conducted to the coil ends 28e and conducted to the outer periphery 22o and the inner periphery 22i of the stator core 22. Heat conducted to the outer periphery 22o is released to the case 70 fixing the stator core 22 coupled thereto. Heat conducted to the inner periphery 22i is released via the gap G to the outer periphery 32o of the rotor core 32. Heat conducted to the outer periphery 32o is released to the case 70 by way of the inner periphery 32i, the rotor shaft 36, and the bearings 40 and 42. Heat of the case 70 is released via air within the engine room to the outside air 72 or released via air within the engine room and the vehicle body to the outside air 72.

The cooling oil OIL cooled by the oil cooler 52 is dripped from the discharge apertures 62 and 64 to cool the corresponding coil ends 28e and flows down into the oil reservoir 68. That is, heat generated through the coil 28 is released to the cooling oil OIL at the coil ends 28e, and the heat-received cooling oil OIL flows down into the oil reservoir 68. Heat from the inner periphery 32i and the outer periphery 32o of the rotor core 32 can be released via air within the case 70 to the cooling oil OIL. Heat from the coil ends 28e can also be released via air within the case to the cooling oil OIL. The heat-received cooling oil OIL is sent to the oil cooler 52 by the pump 50 and is cooled with the cooling water WAT by the oil cooler 52 to thereafter be returned to the cooling oil flow path 60. That is, heat is released from the heat-received cooling oil OIL to the cooling water WAT.

The cooling water WAT cooled by the radiator 58 receives heat from the cooling oil OIL in the oil cooler 52. The heat-received cooling water WAT is sent to the radiator 58 by the pump 56 and is cooled with the outside air 72 by the radiator 58 to thereafter be returned to the oil cooler 52. That is, heat is released from the heat-received cooling water WAT to the outside air 72.

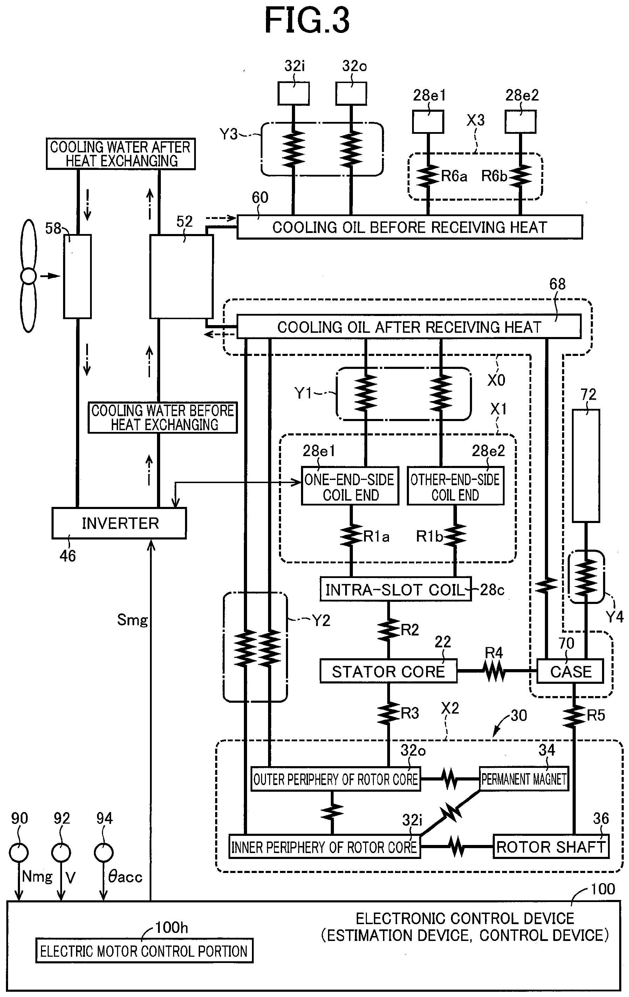

Fig. 3 shows an example of a thermal circuit before simplification, for use in estimating a magnet temperature TH_{mag} [K] that is a temperature of the permanent magnet 34 embedded in the rotor 30 of the electric motor MG. The thermal circuit (network) is equivalently expressed so that a thermal conduction (heat flow) transient can be calculated from the temperature difference, thermal resistance, and heat capacity (which stores heat), similar to an electrical circuit that can calculate a current transient from the voltage difference, electrical resistance, and capacitor (which stores electricity). Here, "elements" of the thermal circuit are constituent elements of the electric motor MG and the cooling circuit 48 equivalently expressed on the thermal circuit, and specifically, are nodes each having a heat capacity located between a plurality of thermal resistances in the thermal circuit. "Internal temperature" is a temperature of the inside of the electric motor MG whose temperature cannot directly be measured on the electric motor MG, and is, for example, a magnet temperature TH_{mag}. The thermal circuit includes, as the "element", the permanent magnet 34 that is a constituent element of the electric motor MG, whose temperature i.e. the magnet temperature TH_{mag} is calculated as the internal temperature. The magnet temperature TH_{mag} is equivalent to "inner temperature" of the present invention.

The thermal circuit shown in Fig. 3 is expressed by the elements such as the one-end-side coil end 28e1, the other-end-side coil end 28e2, the intra-slot coil 28c, the stator core 22, the outer periphery 32o, the inner periphery 32i, the permanent magnet 34, the rotor shaft 36, the case 70, the cooling oil OIL before receiving heat from the coil 28, and the cooling oil OIL after receiving heat from the coil 28, and a thermal resistance R [K/W] between the elements. In Fig. 3, the heat capacity C_{q} [J/K] of each element is not shown.

The thermal resistance R is a quantification of how difficult it is to transfer heat between any two elements. The thermal resistance R is: inversely proportional to a thermal conductivity k [W/(m·K)] of a heat flow path that is a path through which heat flows between two elements; inversely proportional to a cross-sectional area S [m²] of the heat flow path; and proportional to a length L [m] of the heat flow path. Accordingly, the thermal resistance R is previously defined experimentally or by design, based on physical characteristics (e.g. the thermal conductivity k) of the heat flow path between two elements and on shape (e.g. the cross-sectional area S or the length L) of the heat flow path between two elements.

For example, thermal resistance values R1a, R1b, R2, R3, R4, R5, R6a, and R6b are respectively arranged: between the one-end-side coil end 28e1 and the intra-slot coil 28c; between the other-end-side coil end 28e2 and intra-slot coil 28c; between the intra-slot coil 28c and the stator core 22; between the stator core 22 and the outer periphery 32o of the rotor core 32; between the stator core 22 and the case 70; between the rotor shaft 36 and the case 70; between the one-end-side coil end 28e1 and the cooling oil OIL before receiving heat; and between the other-end-side coil end 28e2 and the cooling oil OIL before receiving heat.

The cooling oil OIL after receiving heat from the coil 28 is accumulated in the oil reservoir 68. That is, the heat-received cooling oil OIL is in contact, over a wide area, with the case 70 having a thermal conductivity k higher than air within the case 70. Hence, the thermal resistance value within a broken line X0 shown in Fig. 3 can be regarded as zero. That is, a case temperature TH_{case} [K] as the temperature of the case 70 can be regarded to be equal to the post-heat-reception oil temperature THₒᵢₗ₂ [K]. By regarding in this manner, the thermal circuit can be simplified. For example, one of the case temperature TH_{case} and the post-heat-reception oil temperature THₒᵢₗ₂ can be substituted by the other. In the present invention, the case temperature TH_{case} is the same in meaning as the post-heat-reception oil temperature THₒᵢₗ₂.

The one-end-side coil end 28e1 differs from the other-end-side coil end 28e2 only in that the former protrudes on one end side in the axis CL direction and that the latter protrudes on the other end side in the axis CL direction. The one-end-side coil end 28e1 and the other-end-side coil end 28e2 are cooled in the same manner with the cooling oil OIL dripped from the discharge apertures 62 and 64, respectively. Thus, as to the thermal conduction within a broken line X1 shown in Fig. 3, the stator core 22 and the coil can be regarded to be symmetrical with respect to the central portion of the stator core 22 in the axis CL direction. For example, the one-end-side coil end 28e1 and the other-end-side coil end 28e2 can be regarded as having the same temperature. The thermal resistance value R1a and the thermal resistance value R1b can be regarded as equal to each other.

The thermal resistance value within a broken line X2 shown in Fig. 3 can be regarded as zero. That is, simplification can be achieved regarding the temperature within the rotor 30 as uniform. This is because the rotor core 32, the rotor shaft 36, and the permanent magnet 34 are made of materials each having a relatively high thermal conductivity k and because these are physically in direct contact with each other. For example, between the intra-slot coil 28c and the stator core 22 there exists a j acket that insulates the coil 28, the jacket having a lower thermal conductivity k than the elements within the rotor 30. Between the stator core 22 and the rotor 30, heat is conducted via the gap G, whereas between the elements within the rotor 30, heat is conducted via portions in contact. Accordingly, the thermal resistance value within the rotor 30 is sufficiently low, as compared with the thermal resistance values R2 and R3. Thus, as to the inside of the broken line X2, i.e., as to the interior of the rotor 30, simplification can be achieved regarding the outer periphery 32o, the inner periphery 32i, the permanent magnet 34, and the rotor shaft 36 as having the same temperature.

As compared with heat release from the coil 28 to the cooling oil OIL before receiving heat dripped on the coil ends 28e, heat release via air within the case 70 is overwhelmingly small. For example, thermal resistances R within chain-dotted lines Y1 to Y3 shown in Fig. 3 can each be regarded as infinite. That is, the thermal circuit can be simplified regarding as null the heat reception/release via air in the case 70 within the chain-dotted lines Y1 to Y3.

In case that a plurality of elements are combined into one element as a result of the simplification of the thermal circuit, the heat capacity C_{q} of the combined one element is previously defined experimentally or by design, based on the physical characteristics (e.g. thermal conductivity k), the shape, etc. of the element.

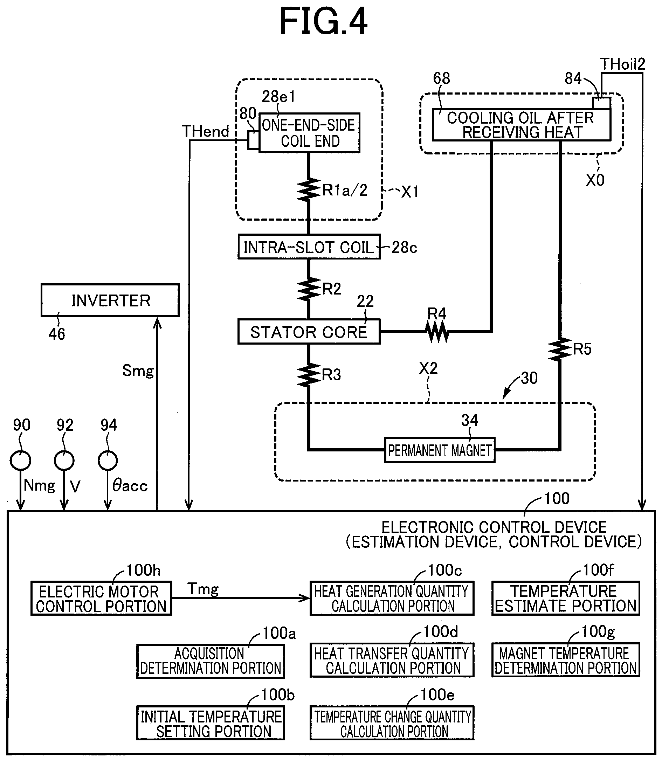

Fig. 4 is a function block diagram of an example of the simplified thermal circuit and an electronic control device 100 that estimates the temperature of the permanent magnet 34 embedded in the rotor 30 of the electric motor MG, according to the first embodiment of the present invention. The thermal circuit shown in Fig. 4 is subjected to the various simplifications described in Fig. 3.

The electronic control device 100 is configured including a so-called microcomputer having e.g. a CPU, a RAM, a ROM, an I/O interface, etc., the CPU executing various controls for the vehicle 10 by performing signal processing in accordance with a program previously stored in the ROM while utilizing the temporary storage function of the RAM. The electronic control device 100 is equivalent to "estimation device" of the present invention and also to "control device" thereof. The "control device" of the present invention is configured to include the "estimation device" of the present invention.

Input to the electronic control device 100 are various signals, etc. (e.g., a coil end temperature TH_{end} [K] that is a temperature of the one-end-side coil end 28e1, the post-heat-reception oil temperature THₒᵢₗ₂ [K], an MG rotation number N_{mg} [rpm] that is a rotation speed of the electric motor MG, a vehicle velocity V [km/h], an accelerator opening θ_{acc} [%] that is a driver's accelerator operation quantity representative of the magnitude of the driver's acceleration operation, etc.) based on detection values of various sensors, etc. (e.g., a coil end temperature sensor 80, an oil temperature sensor 84, an MG rotation number sensor 90, a vehicle velocity sensor 92, an accelerator opening sensor 94, etc.) disposed in the vehicle 10. The coil end temperature TH_{end} is equivalent to "coil temperature" of the present invention.

The electronic control device 100 outputs various command signals (e.g., an MG control signal S_{mg} for controlling the electric motor MG, etc.) to the devices (e.g., the inverter 46, etc.) disposed in the vehicle 10.

The electronic control device 100 functionally includes an acquisition determination portion 100a, an initial temperature setting portion 100b, a heat generation quantity calculation portion 100c, a heat transfer quantity calculation portion 100d, a temperature change quantity calculation portion 100e, a temperature estimate portion 100f, a magnet temperature determination portion 100g, and an electric motor control portion 100h.

The electric motor control portion 100h controls an MG torque T_{mg} [N·m] that is a torque output from the electric motor MG, so as to achieve a required drive quantity for the vehicle 10. A required torque T_{req} [N·m] is calculated by e.g. applying the actual accelerator opening θ_{acc} and vehicle velocity V to a relationship (e.g. driving force map) among the accelerator opening θ_{acc}, the vehicle velocity V, and the required torque T_{rq} required for vehicle 10. The MG control signal S_{mg} is a command value of a power consumption Wₘ [W] of the electric motor MG that outputs the MG torque T_{mg} at the MG rotation number N_{mg} at that time for example. The MG torque T_{mg} is equivalent to "electric motor output torque" of the present invention.

The acquisition determination portion 100a determines whether it is possible by using the thermal circuit to acquire a temperature TH(m) of each element at a point of time (hereinafter, referred to as "most-recent point of time m") anterior to a current point of time n [s] by a predetermined term Δt. The predetermined term Δt is a predefined term in which it is possible by using the thermal circuit for example to calculate the magnet temperature TH_{mag}, and is a cycle at which the magnet temperature TH_{mag} is repeatedly calculated. As used herein, in case that parentheses are added to the temperature TH of each element or a temperature THₐ of an element A like TH(m) and TH(n) for example, it means the temperature at a point of time expressed by a letter in the parentheses added. The current point of time n to estimate the magnet temperature TH_{mag} is equivalent to "estimation point of time" of the present invention.

If it has been determined by the acquisition determination portion 100a that the temperature TH(m) of each element at the most-recent point of time m cannot be acquired, the initial temperature setting portion 100b sets the temperature TH(m) of each element at the most-recent point of time m. In the case where it has been determined by the acquisition determination portion 100a that the temperature TH(m) of each element cannot be acquired, the setting of the temperature TH(m) of each element by the initial temperature setting portion 100b is referred to as initial setting and the initially set temperature is referred to as initial temperature. A method of setting up the initial temperature by the initial temperature setting portion 100b will be described later.

Heat generation quantity calculation portion 100c calculates a heat generation quantity Q_{g} [W] of each element of the thermal circuit. Heat generation of the electric motor MG is mainly caused by iron loss, copper loss, and mechanical loss. The iron loss is loss that occurs in a magnetic material (typically, iron) and includes hysteresis loss and eddy current loss. The copper loss is loss that is generated in a coil by a resistance component of the coil. The mechanical loss is loss that is generated by friction of the bearing 42 and windage loss of rotating parts. These iron loss, copper loss, and the mechanical loss depend on the MG rotation number N_{mg} and the MG torque T_{mg}.

Here, referred to as a heat generation quantity map is a map representative of a relationship defined in advance experimentally or by design between the MG rotation number N_{mg} and the MG torque T_{mg}, and the heat generation quantity Q_{g} per unit time of each element of the thermal circuit. The heat generation quantity map is prepared for each of the elements. For example, a heat generation quantity Q_{ga} per unit time of the element A is calculated by applying the MG rotation number N_{mg} and the MG torque T_{mg} at the current point of time n to the heat generation quantity map of the element A.

The heat transfer quantity calculation portion 100d acquires the temperature TH(m) of each element at the most-recent point of time m and calculates a heat transfer quantity Qₜ [W] of each element of the thermal circuit. For example, in case that there is an element B connected to the element A with a thermal resistance value R_{ab}, an element-to-element heat transfer quantity Q_{tab} [W] per unit time of the element A to the element B is calculated as a quotient {=(TH_{b}-THₐ)/R_{ab}} obtained by dividing a difference between the temperature T_{Hb} [K] of the element B and the temperature THₐ [K] of the element A at the most-recent time of point m by the thermal resistance value R_{ab}. When the element-to-element heat transfer quantity Q_{tab} is a negative value, it represents the quantity of heat release per unit time of the element A to the element B, whereas when the element-to-element heat transfer quantity Q_{tab} is a positive value, it represents the quantity of heat reception per unit time of the element A from the element B. In case that a plurality of elements B are connected to the element A via the thermal resistance, the heat transfer quantity Qₜₐ [W] per unit time of the element A is calculated by calculating the element-to-element heat transfer quantity Q_{tab} for each of the plurality of elements B and then totaling those calculated element-to-element heat transfer quantities Q_{tab}. In the estimation of the magnet temperature TH_{mag} using the thermal circuit of the present invention, the post-heat-reception oil temperature THₒᵢₗ₂ and the coil end temperature TH_{end} detected by the oil temperature sensor 84 and the coil end temperature sensor 80, respectively, are used as boundary conditions. The boundary conditions are conditions to be satisfied in case of estimating the magnet temperature TH_{mag} using the thermal circuit.

The temperature change quantity calculation portion 100e calculates a temperature change quantity ΔTH [K/s] of each element of the thermal circuit. For example, as to a certain element A, with a heat generation quantity Q_{ga} [W] per unit time, a heat transfer quantity Qₜₐ [W] per unit time, and a heat capacity C_{qa}, a temperature change quantity ΔTHₐ [K] of the element A in a predetermined term Δt is calculated as {(Q_{ga}+Qₜₐ)/C_{qa}×Δt}. The heat capacity C_{qa} is defined in advance experimentally or by design, based on the physical characteristics (e.g. thermal conductivity k), the shape, etc. of the element A.

The temperature estimate portion 100f estimates a temperature TH(n) of each element at the current point of time n. For example, the sum {=THₐ(m)+ ΔTHₐ} of the temperature THₐ(m) and the temperature change quantity ΔTHₐ of the element A at the most-recent point of time m is calculated, i.e., estimated as a temperature THₐ(n) of the element A at the current point of time n.

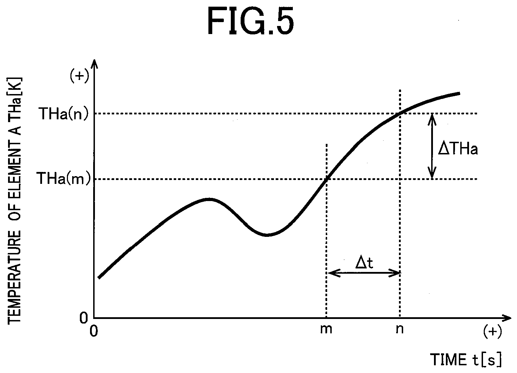

Fig. 5 shows a temperature change of a certain element A as a representative of the elements of the thermal circuit shown in Fig. 4. In Fig. 5, the horizontal axis represents time t [s], and the vertical axis represents temperature THₐ [K] of the element A.

Referring back to Fig. 4, the magnet temperature determination portion 100g determines whether a magnet temperature TH_{mag}(n) at the current point of time n estimated by the temperature estimate portion 100f is greater than or equal to a judgment temperature TH_{mag_jdg}. The judgment temperature TH_{mag_jdg} is an upper limit temperature defined in advance experimentally or by design so as to prevent the permanent magnet 34 from being demagnetized as a result of temperature rise. The judgment temperature TH_{mag_jdg} is equivalent to "predetermined judgment temperature" of the present invention.

When the magnet temperature TH_{mag}(n) is determined to be greater than or equal to the judgment temperature TH_{mag_jdg} by the magnet temperature determination portion 100g, the electric motor control portion 100h executes output restriction of the electric motor MG so that the magnet temperature TH_{mag} lowers, i.e., so that the heat generation quantity Q_{g} of the electric motor MG decreases. For example, the MG rotation number N_{mg} and the MG torque T_{mg} are reduced than before.

As described above, in the estimation of the temperature TH(n) of each element at the current point of time n using the thermal circuit, the temperature TH(m) of each element at the most-recent point of time m needs to be acquired. For example, in case that the estimation of the temperature TH(n) of each element using the thermal circuit is performed repeatedly every predetermined term Δt, it is possible to acquire the temperature TH(m) of each element estimated at the most-recent point of time m anterior to the current point of time n by the predetermined term Δt. By the way, for example, in case that running of the vehicle 10 is started when an ignition switch is switched from off state (IG-OFF) to on state (IG-ON) so that the electric motor MG shifts from the stop state to the operation start state, the estimation of the temperature TH of each element using the thermal circuit may not be performed in a term (hereinafter, referred to as "stop term Tₛₜₒₚ") until the electric motor MG is switched from the stop state to the operation start state. In such a case, it is not possible to acquire the temperature TH(m) of each element at the most-recent point of time m (=ts-Δt) at an operation start point of time ts [s] corresponding to the current point of time n. It is therefore necessary to decide the temperature TH(m) of each element at the most-recent point of time m.

In case that the temperature TH(m) of each element at the most-recent point of time m cannot be acquired, the initial temperature setting portion 100b performs initial setting.

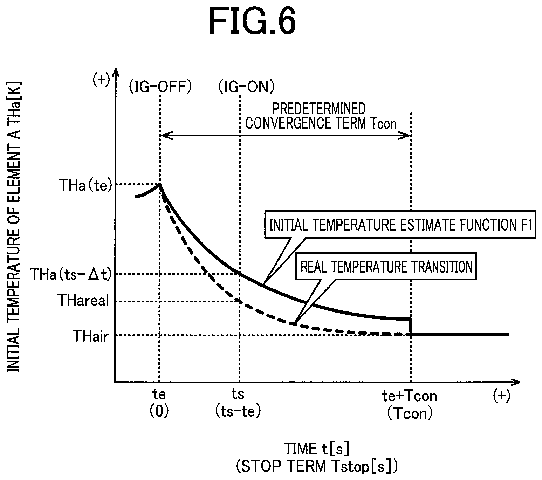

Fig. 6 shows an example of an initial temperature estimate function F1 used in a method of setting up the initial temperature of a certain element A as a representative of the elements of the thermal circuit shown in Fig. 4. The initial temperature estimate function F1 is prepared for each of the elements. The initial temperature estimate function F1 is a function representing a relationship defined in advance experimentally or by design between a stop-point-of-time temperature THₐ(te) that is a temperature of the element A at a stop point of time te [s] and a stop term Tₛₜₒₚ [s], and an initial temperature THₐ(ts-Δt) of the element A at the most-recent point of time m at the operation start point of time ts. The initial temperature estimate function F1 is equivalent to "first relationship" of the present invention. For example, the stop term Tₛₜₒₚ [s] is measured by a timer not shown. As shown in Fig. Fig. 6, for example, at the stop point of time te [s] at which the electric motor MG stops as a result of switching of the ignition switch from on state to off state in the last running before the operation start point of time ts, the temperature of the element A is estimated to be the stop-point-of-time temperature THₐ(te). The initial temperature estimate function F1 is designed such that the initial temperature THₐ(ts-Δt) of the element A converges from the stop-point-of-time temperature THₐ(te) toward an outside air temperature THₐᵢᵣ [K] according as the stop term Tₛₜₒₚ [s] becomes longer.

A predetermined convergence term T_{con} [s] is a predefined term where the temperature of the element A is estimated to be approximately equal to the outside air temperature THₐᵢᵣ, i.e., where the difference between the temperature THₐ of the element A and the outside air temperature THₐᵢᵣ is estimated to converge within a predetermined temperature difference. The predetermined temperature difference is a predefined temperature difference where the error between the initial temperature THₐ(ts-Δt) estimated for the element A and a real temperature THₐᵣₑₐₗ [K] as an actual temperature, particularly, the error estimated immediately after the start of operation is within an allowable range in estimating the magnet temperature TH_{mag}. For example, the stop-point-of-time temperature THₐ(te) is a temperature calculated for the element A at the stop point of time te (e.g. end point of time of the last running). After the lapse of the predetermined convergence term T_{con}, the initial temperature THₐ(ts-Δt) of the element A defined by the initial temperature estimate function F1 is the coil end temperature TH_{end} that is approximately the same as the outside air temperature THₐᵢᵣ, or the post-heat-reception oil temperature THₒᵢₗ₂.

In case that it has been determined that the temperature TH(m) cannot be acquired, the initial temperature setting portion 100b performs initial setting in which the initial temperature of the element A at the operation start point of time ts is the initial temperature THₐ(ts-Δt) of the element A estimated by applying the stop term Tₛₜₒₚ at the operation start point of time ts to the initial temperature estimate function F 1.

By the way, the initial temperature THₐ(ts-Δt) of the element A estimated using the initial temperature estimate function F 1 may be set higher than the real temperature THₐᵣₑₐₗ of the element A as shown in Fig. Fig. 6, or may be set lower than it. Since in the temperature estimation of each element using the thermal circuit, actual measurements i.e. detection values of the sensors are applied to the post-heat-reception oil temperature THₒᵢₗ₂ and the coil end temperature TH_{end} as the boundary conditions, in case that for example, the initial temperature THₐ(ts-Δt) has been set higher than the real temperature THₐᵣₑₐₗ, the element-to-element heat transfer quantity Q_{tab} on the thermal circuit is calculated to be greater than the actual quantity. On the other hand, in case that for example, the initial temperature THₐ(ts-Δt) has been set lower than the real temperature THₐᵣₑₐₗ, the element-to-element heat transfer quantity Q_{tab} on the thermal circuit is calculated to be less than the actual quantity. Thus, each time the temperature estimation of each element is repeated from the operation start point of time ts using the thermal circuit, the estimated temperature THₐ(n) of the element A at the current point of time n approaches the real temperature THaᵣₑₐₗ. In consequence, high accuracy need not necessarily be imparted to the initial temperature THₐ(ts-Δt) of the element A for example, estimated using the initial temperature estimate function F 1.

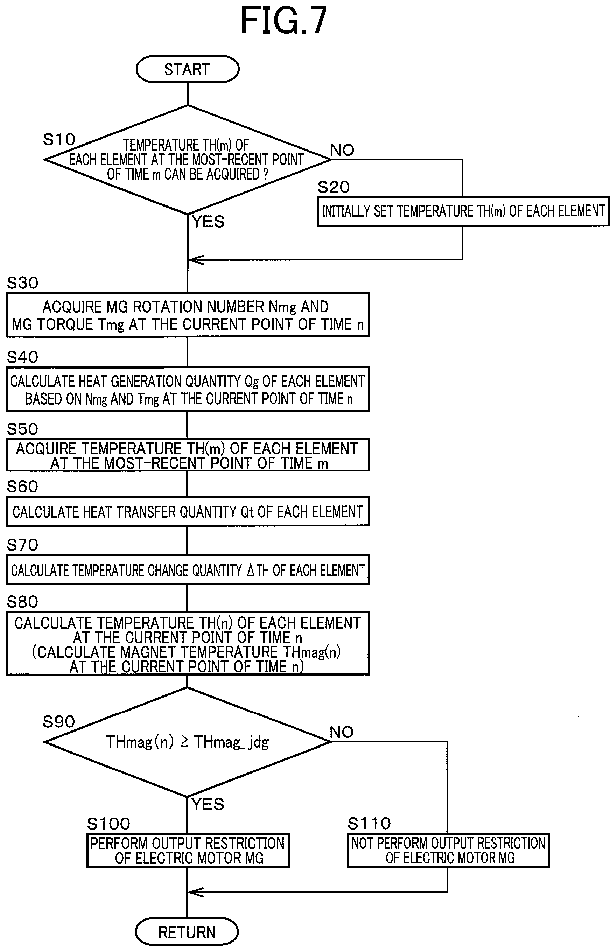

Fig. 7 is an example of a flowchart explaining control actions of the electronic control device 100 shown in Fig. 4. The flowchart of Fig. 7 is repeatedly executed when the electric motor MG is in operation with the ignition switch on.

First, at step (hereinafter, the term step will be omitted) S10 corresponding to the function of the acquisition determination portion 100a, it is determined whether the temperature TH(m) of each element at the most-recent point of time m at the current point of time can be acquired. If determination at S10 is negative, at S20 corresponding to the function of the initial temperature setting portion 100b, the temperature TH(m) of each element at the most-recent point of time m is initially set.

If determination at S10 is affirmative and after execution of S20, at S30 corresponding to the function of the heat generation quantity calculation portion 100c, the MG rotation number N_{mg} and the MG torque T_{mg} at the current point of time n are acquired. After execution of S30, at S40 corresponding to the function of the heat generation quantity calculation portion 100c, the heat generation quantity Q_{g} of each element is calculated based on the MG rotation number N_{mg} and the MG torque T_{mg} at the current point of time n acquired at S30.

After execution of S40, at S50 corresponding to the function of the heat transfer quantity calculation portion 100d, the temperature TH(m) of each element at the most-recent point of time m is acquired. After execution of S50, at S60 corresponding to the function of the heat transfer quantity calculation portion 100d, the heat transfer quantity Qₜ between elements is calculated based on the temperature TH(m) of each element at the most-recent point of time m acquired at S50 and on the thermal resistance R between the elements.

After execution of S60, at S70 corresponding to the function of the temperature change quantity calculation portion 100e, the temperature change quantity ΔTH of each element in the predetermined term Δt is calculated based on the heat generation quantity Q_{g} of each element calculated at S40, the heat transfer quantity Qₜ calculated at S60, and the heat capacity C_{q} of each element. After execution of S70, at S80 corresponding to the function of the temperature estimate portion 100f, the temperature TH(n) of each element at the current point of time n is calculated and estimated. At S80, the magnet temperature TH_{mag} at the current point of time n is also calculated.

After execution of S80, at S90 corresponding to the function of the magnet temperature determination portion 100g, it is determined whether the magnet temperature TH_{mag} at the current point of time n is greater than or equal to the judgment temperature TH_{mag_jdg}. If determination at S90 is affirmative, at S100 corresponding to the function of the electric motor control portion 100h, the output restriction of the electric motor MG is performed. If determination at S90 is negative, at S110 corresponding to the function of the electric motor control portion 100h, the output restriction of the electric motor MG is not performed. After execution of S100 and after execution of S110, the procedure returns.

According to the electronic control device 100 of this embodiment, the magnet temperature TH_{mag} is estimated using the thermal circuit that regards the post-heat-reception oil temperature THₒᵢₗ₂ as equal to the case temperature TH_{case}. In case that the estimated magnet temperature TH_{mag} is greater than or equal to the judgment temperature TH_{mag_jdg}, the electric motor MG is subjected to the output restriction. The thermal circuit is simplified by regarding the post-heat-reception oil temperature THₒᵢₗ₂ as equal to the case temperature TH_{case} in the thermal circuit used for estimation of the magnet temperature TH_{mag}. Thus, even though the electric motor MG is cooled by the cooling oil OIL within the case 70, it is possible to suppress lowering in the estimate accuracy of the magnet temperature TH_{mag} and to reduce the calculation load of the magnet temperature TH_{mag} in the electronic control device 100. In the case where lowering in the estimate accuracy of the magnet temperature TH_{mag} is suppressed, as compared with the case not suppressed, it is possible to avoid degradation in performance of the electric motor MG while securing the output performance of the electric motor MG by setting up higher the judgment temperature TH_{mag_jdg} defined to avoid the performance degradation of the electric motor MG, or to maximize the output performance of the electric motor MG while reducing the cost by employing the permanent magnet 34 of a grade having a relatively low heat resistance.

According to the electronic control device 100 of this embodiment, the thermal circuit undergoes: simplification regarding the stator core 22 and the coil 28 as symmetrical with respect to the central portion of the stator core 22 in the axis CL direction; simplification regarding the temperature within the rotor 30 as uniform; and simplification regarding the heat reception/release via air within the case as null between the rotor 30 and the cooling oil OIL. In case of performing these simplifications in the thermal circuit, as compared with the case not performing these simplifications, the calculation load can further be reduced.

According to the electronic control device 100 of this embodiment, the magnet temperature TH_{mag} is estimated using the thermal circuit with the post-heat-reception oil temperature THₒᵢₗ₂ and the coil end temperature TH_{end} as the boundary conditions, and in case that the estimated magnet temperature TH_{mag} is greater than or equal to the judgment temperature TH_{mag_jdg}, the output restriction of the electric motor MG is executed. By estimating the magnet temperature TH_{mag} with the boundary conditions using the thermal circuit, degradation in the estimate accuracy of the magnet temperature TH_{mag} is suppressed.

According to the electronic control device 100 of this embodiment, it includes: (a) the heat generation quantity calculation portion 100c that calculates the heat generation quantity Q_{g} of each element in the thermal circuit, based on the MG rotation number N_{mg} and the MG torque T_{mg} at the current point of time n; (b) the heat transfer quantity calculation portion 100d that calculates the heat transfer quantity Qₜ of each element, based on the boundary conditions and the temperature TH(m) of each element at the most-recent point of time m, using the thermal circuit; (c) the temperature change quantity calculation portion 100e that calculates the temperature change quantity ΔTH of each element in a term between the most-recent point of time m and the current point of time n, based on the heat generation quantity Q_{g}, the heat transfer quantity Qₜ, and the heat capacity C_{q} of each element; (d) the temperature estimate portion 100f that estimates the magnet temperature TH_{mag} at the current point of time n, based on the temperature TH(m) and the temperature change quantity ΔTH of each element at the most-recent point of time m; and (e) the electric motor control portion 100h that executes output restriction of the electric motor MG in case that the estimated magnet temperature TH_{mag} is greater than or equal to the judgment temperature TH_{mag_jdg}. By virtue of including the heat generation quantity calculation portion 100c, the heat transfer quantity calculation portion 100d, the temperature change quantity calculation portion 100e, the temperature estimate portion 100f, and the electric motor control portion 100h, the magnet temperature TH_{mag} can be estimated even in the case where the electric motor MG is cooled by the cooling oil OIL within the case 70. It is also possible to avoid degradation in performance of the electric motor MG while securing the output performance of the electric motor MG or to maximize the output performance of the electric motor MG while reducing the cost by employing the permanent magnet 34 of a grade having a relatively low heat resistance.

According to the electronic control device 100 of this embodiment, it includes the initial temperature setting portion 100b that initially sets up the initial temperature TH(ts-Δt) of each element, based on the initial temperature estimate function F1, in case that the electric motor MG is switched from the stop state to the operation state. By performing such initial setting of the initial temperature TH(ts-Δt) of each element by the initial temperature setting portion 100b even when the electric motor MG is switched from the stopped state to the operation state, the magnet temperature TH_{mag} estimated by the electronic control device 100 easily achieves faster convergence to the actual temperature, as compared with the case not performing the initial setting. This leads to improvement in the estimate accuracy of the magnet temperature TH_{mag} in the electronic control device 100.

According to the method of estimating the magnet temperature TH_{mag} of the electric motor MG of this embodiment, the magnet temperature TH_{mag} is estimated using the thermal circuit that regards the post-heat-reception oil temperature THₒᵢₗ₂ as equal to the case temperature TH_{case}. This presents similar effects to those of the electronic control device 100 in the method of estimating the magnet temperature TH_{mag} of the electric motor MG.

According to the method of estimating the magnet temperature TH_{mag} of the electric motor MG of this embodiment, similarly to the electronic control device 100 of this embodiment, the thermal circuit is simplified and the initial temperature TH(ts-Δt) of each element of the thermal circuit is initially set, thereby presenting similar effects to those of the electronic control device 100.

According to the method of estimating the magnet temperature TH_{mag} of the electric motor MG of this embodiment, the magnet temperature TH_{mag} is estimated using the thermal circuit with the post-heat-reception oil temperature THₒᵢₗ₂ and the coil end temperature TH_{end} as the boundary conditions. This presents similar effects to those of the electronic control device 100 in the method of estimating the magnet temperature TH_{mag} of the electric motor MG.

According to the method of estimating the magnet temperature TH_{mag} of the electric motor MG of this embodiment, (a) the heat generation quantity Q_{g} of each element in the thermal circuit is calculated based on the MG rotation number N_{mg} and the MG torque T_{mg} at the current point of time n, (b) the heat transfer quantity Qₜ of each element is calculated based on the boundary conditions and the temperature TH(m) of each element at the most-recent point of time m, using the thermal circuit, (c) the temperature change quantity ΔTH of each element in the term between the most-recent point of time m and the current point of time n is calculated based on the heat generation quantity Q_{g}, the heat transfer quantity Qₜ, and the heat capacity C_{q} of each element, and (d) the magnet temperature TH_{mag} at the current point of time n is estimated based on the temperature TH(m) of each element and the temperature change quantity ΔTH of each element at the most-recent point of time m. This presents similar effects to those of the electronic control device 100 of this embodiment in the method of estimating the magnet temperature TH_{mag} of the electric motor MG.

### Second Embodiment

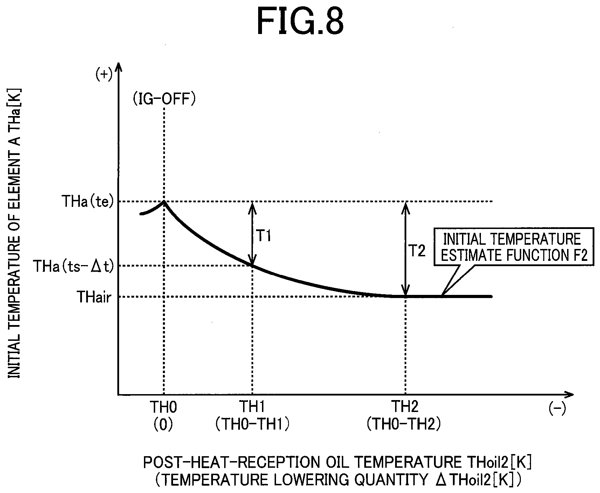

Fig. 8 shows an example of an initial temperature estimate function F2 for use in a setting method of a certain element A as a representative of elements of the thermal circuit, according to a second embodiment of the present invention. This embodiment differs from the first embodiment in that the former uses the initial temperature estimate function F2 of Fig. 8 instead of the initial temperature estimate function F1 of Fig. 6 used in the first embodiment. The initial temperature estimate function F2 is prepared for each of the elements.

The initial temperature estimate function F2 represents a relationship defined in advance experimentally or by design between the stop-point-of-time temperature THₐ(te) and a temperature lowering quantity ΔTHₒᵢₗ₂ [K] of the post-heat-reception oil temperature THₒᵢₗ₂ in the stop term Tₛₜₒₚ, and the initial temperature THₐ(ts-Δt) of the element A at the most-recent point of time m at the operation start point of time ts. The initial temperature estimate function F2 is equivalent to "second relationship" of the present invention. According as the stop term Tₛₜₒₚ becomes longer, the post-heat-reception oil temperature THₒᵢₗ₂ converges from an oil temperature TH0 [K] at the stop point of time te toward the outside air temperature THₐᵢᵣ, while the temperature THₐ of the element A also converges toward the outside air temperature THₐᵢᵣ. Therefore, according as the temperature lowering quantity ΔTHₒᵢₗ₂ [K] increases, the temperature THₐ of the element A converges from the stop-point-of-time temperature THₐ(te) toward the outside air temperature THₐᵢᵣ. The temperature lowering quantity ΔTHₒᵢₗ₂ is equivalent to "temperature lowering quantity of at least one of a first temperature and a second temperature" of the present invention.

As shown in Fig. 8, for example, in case that the post-heat-reception oil temperature THₒᵢₗ₂ at the stop point of time te is the oil temperature TH0 and that the post-heat-reception oil temperature THₒᵢₗ₂ at the operation start point of time ts is an oil temperature TH1 [k], i.e., in case that the temperature lowering quantity ΔTHₒᵢₗ₂ is "TH0-TH1", the initial temperature THₐ(ts-Δt) of the element A is "THₐ(te)-T1". For example, in case that the post-heat-reception oil temperature THₒᵢₗ₂ at the stop point of time te is the oil temperature TH0 and that the post-heat-reception oil temperature THₒᵢₗ₂ at the operation start point of time ts is an oil temperature TH2 (=THₐᵢᵣ) [k], i.e., in case that the temperature lowering quantity ΔTHₒᵢₗ₂ is "TH0-TH2", the initial temperature THₐ(ts-Δt) of the element A is "THₐ(te)-T2".

According to the electronic control device 100 of this embodiment, it includes the initial temperature setting portion 100b that initially sets up the initial temperature TH(ts-Δt) of each element, based on the initial temperature estimate function F2 in case that the electric motor MG is switched from the stop state to the operation state. Also in case that the electric motor MG is switched from the stop state to the operation state, by performing such initial setting of the initial temperature TH(ts-Δt) of each element by the initial temperature setting portion 100b, the magnet temperature TH_{mag} estimated by the electronic control device 100 is easier to quickly converge to the actual temperature, as compared with the case not performing the initial setting. This leads to improvement in the estimate accuracy of the magnet temperature TH_{mag} in the electronic control device 100. The initial temperature setting portion 100b of this embodiment need not include a timer that measures the stop term Tₛₜₒₚ on the vehicle 10.

According to the electronic control device 100 and the method of estimating the magnet temperature TH_{mag} of the electric motor MG, of this embodiment, by having similar configurations to those of the first embodiment, similar effects to those of the first embodiment are presented accordingly.

### Third Embodiment

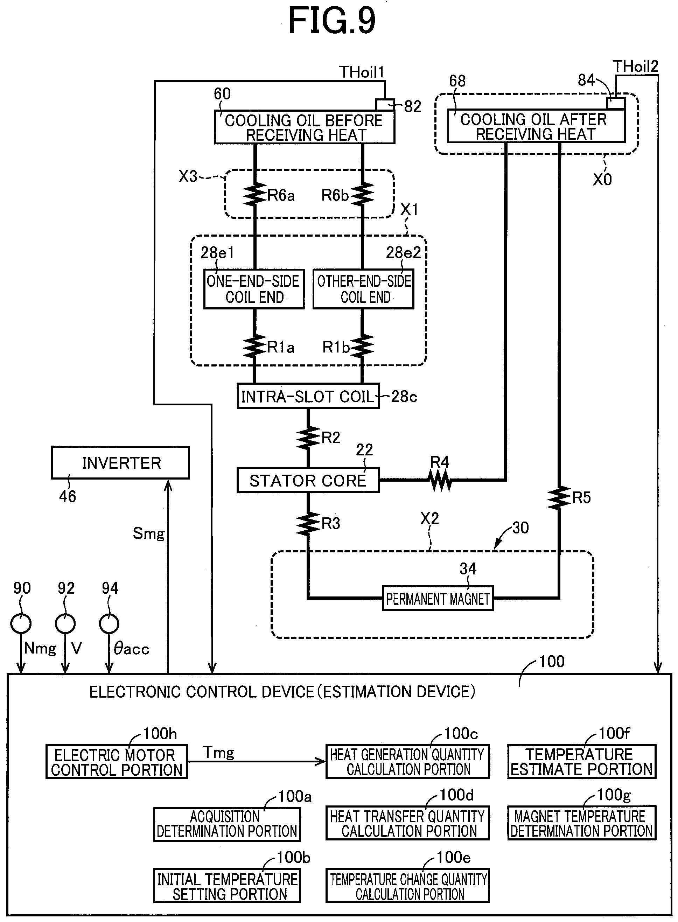

Fig. 9 is a function block diagram of an example of the simplified thermal circuit, and the electronic control device 100 that estimates the temperature of the permanent magnet 34 embedded in the rotor 30 of the electric motor MG, according to a third embodiment of the present invention. This embodiment differs in that it uses a thermal circuit shown in Fig. 9 instead of the thermal circuit of Fig. 4 used in the first embodiment.

The thermal circuit shown in Fig. 9 undergoes simplification within the broken line X0, simplification within the broken line X2, simplification within the chain-dotted line Y1, simplification within the chain-dotted line Y2, simplification within the chain-dotted line Y3, and simplification within a chain-dotted line Y4, in the thermal circuit before simplification of Fig. 3 described in the first embodiment.

As compared with heat release from the coil 28 to the cooling oil OIL before receiving heat dripped on the coil ends 28e, heat release from the case 70 via air within the engine room to the outside air 72 is overwhelmingly small. For this reason, a thermal resistance R within the chain-dotted line Y4 shown in Fig. 3 can be regarded as infinite. That is, the thermal circuit can be simplified regarding as null the heat reception/release via air in the case 70 within the chain-dotted line Y4.

The electronic control device 100 receives the pre-heat-reception oil temperature THₒᵢₗ₁ based on the detection value of the oil temperature sensor 82 disposed on the vehicle 10, instead of the coil end temperature TH_{end} based on the detection value of the coil end temperature sensor 80 disposed on the vehicle 10 in the first embodiment.

In the estimation of the magnet temperature TH_{mag} using the thermal circuit in this embodiment, the boundary conditions are the post-heat-reception oil temperature THₒᵢₗ₂ and the pre-heat-reception oil temperature THₒᵢₗ₁ detected by the oil temperature sensors 84 and 82, respectively.

According to the electronic control device 100 and the method of estimating the magnet temperature TH_{mag} of the electric motor MG, of this embodiment, by having similar configurations to those of the first embodiment, similar effects to those of the first embodiment are presented accordingly.

According to the electronic control device 100 and the method of estimating the magnet temperature TH_{mag} of the electric motor MG, of this embodiment, the magnet temperature TH_{mag} is estimated using the thermal circuit with the post-heat-reception oil temperature THₒᵢₗ₂ and the pre-heat-reception oil temperature THₒᵢₗ₁ as the boundary conditions, and in case that the estimated magnet temperature TH_{mag} is greater than or equal to the judgment temperature TH_{mag_jdg}, the output restriction of the electric motor MG is executed. By estimating the magnet temperature TH_{mag} with the boundary conditions using the thermal circuit, degradation in the estimate accuracy of the magnet temperature TH_{mag} is suppressed.

### Fourth Embodiment

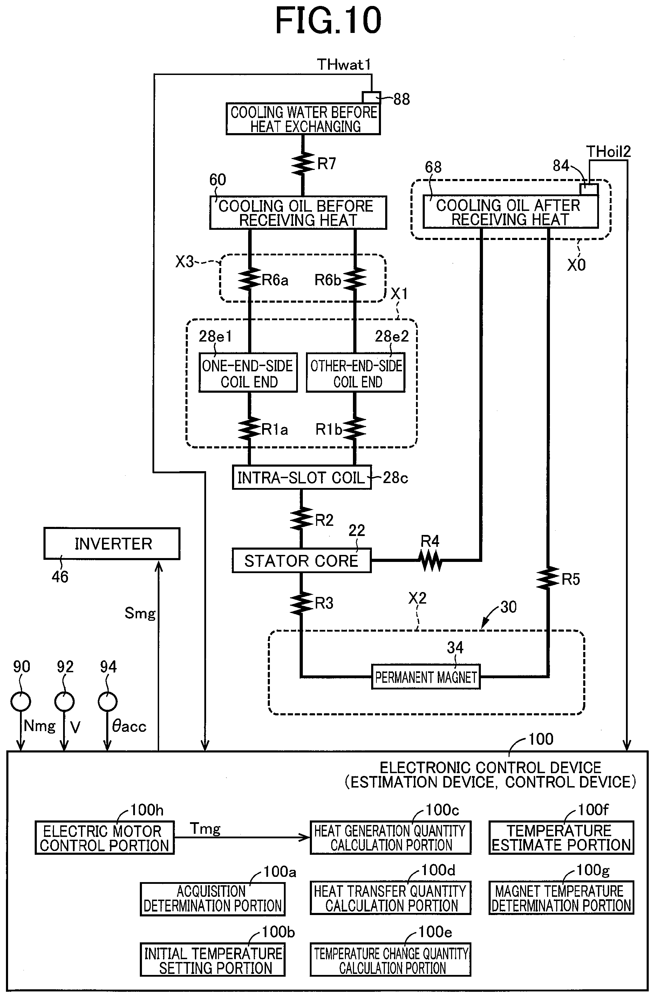

Fig. 10 is a function block diagram of an example of the simplified thermal circuit, and the electronic control device 100 that estimates the temperature of the permanent magnet 34 embedded in the rotor 30 of the electric motor MG, according to a fourth embodiment of the present invention. This embodiment differs in that it uses a thermal circuit shown in Fig. 10 instead of the thermal circuit of Fig. 4 used in the first embodiment.

The thermal circuit shown in Fig. 10 undergoes simplification within the broken line X0, simplification within the broken line X2, simplification within the chain-dotted line Y1, simplification within the chain-dotted line Y2, simplification within the chain-dotted line Y3, and simplification within the chain-dotted line Y4, in the thermal circuit before simplification of Fig. 3 described in the first embodiment. Simplification within the chain-dotted line Y4 is the same as that described in the second embodiment.

A thermal resistance value R7 shown in Fig. 10 between the cooling water WAT before heat exchange and the cooling oil OIL before heat reception represents a heat exchange efficiency of the oil cooler 52 shown in Fig. 3. The smaller the thermal resistance value R7 is, the higher the heat exchange efficiency becomes.

The electronic control device 100 receives the pre-heat-exchange water temperature TH_{wat1} based on the detection value of a water temperature sensor 88 disposed on the vehicle 10, instead of the coil end temperature TH_{end} based on the detection value of the coil end temperature sensor 80 disposed on the vehicle 10 in the first embodiment.

In the estimation of the magnet temperature TH_{mag} using the thermal circuit in this embodiment, the boundary conditions are the post-heat-reception oil temperature THₒᵢₗ₂ and the pre-heat-exchange water temperature TH_{wat1} detected by the oil temperature sensors 84 and the water temperature sensor 88, respectively.

According to the electronic control device 100 and the method of estimating the magnet temperature TH_{mag} of the electric motor MG, of this embodiment, by having similar configurations to those of the first embodiment, similar effects to those of the first embodiment are presented accordingly.

According to the electronic control device 100 and the method of estimating the magnet temperature TH_{mag} of the electric motor MG, of this embodiment, the magnet temperature TH_{mag} is estimated using the thermal circuit with the post-heat-reception oil temperature THₒᵢₗ₂ and the pre-heat-exchange water temperature TH_{wat1} as the boundary conditions, and in case that the estimated magnet temperature TH_{mag} is greater than or equal to the judgment temperature TH_{mag_jdg}, the output restriction of the electric motor MG is executed. By estimating the magnet temperature TH_{mag} with the boundary conditions using the thermal circuit, degradation in the estimate accuracy of the magnet temperature TH_{mag} is suppressed.

Although the embodiments of the present invention have been described with reference to the drawings, the present invention is applicable also to other modes.

In the third and fourth embodiments, similarly to the first embodiment, the thermal circuit before simplification shown in Fig. 3 may be subjected to simplification within the broken line X1.

In the third and fourth embodiments, the thermal circuit before simplification shown in Fig. 3 may be subjected to simplification within the broken line X3. Specifically, as to the thermal conduction within the broken line X3, similarly to within the broken line X1, the stator core 22 and the coil 28 can be regarded as symmetrical with respect to the central portion of the stator core 22 in the axis CL direction. That is, the one-end-side coil end 28e1 and the other-end-side coil end 28e2 can be regarded as having the same temperature. The thermal resistance values R6a and R6b can be regarded as equal to each other. As a result, simplification may be performed that regards heat transfer not to be performed between the cooling oil OIL before heat reception and the other-end-side coil end 28e2, with the thermal resistance value of "R6a/2" between the cooling oil OIL before heat reception and the one-end-side coil end 28e1.

Although in the first to fourth embodiments, the thermal circuit before simplification shown in Fig. 3 has been subjected to a plurality of simplifications, it may undergo at least one of the simplifications described in each embodiment.

Although in the second embodiment, the initial temperature estimate function F2 has represented a relationship defined in advance experimentally or by design between the stop-point-of-time temperature THₐ(te) and a temperature lowering quantity ΔTH_{end} [K] of the coil end temperature TH_{end} in the stop term Tₛₜₒₚ, and the initial temperature THₐ(ts-At) of the element A, this mode is not limitative. For example, the initial temperature estimate function F2 may represent a relationship defined in advance experimentally or by design between the stop-point-of-time temperature THₐ(te) and the temperature lowering quantity ΔTHₒᵢₗ₂ in the stop term Tₛₜₒₚ, and the initial temperature THₐ(ts-Δt) of the element A at the operation start point of time ts. In case that the initial setting is performed using the initial temperature estimate function F2 in the third and fourth embodiments, the initial temperature estimate function F2 may represent a relationship defined in advance experimentally or by design between the stop-point-of-time temperature THₐ(te) and the temperature lowering quantity of the pre-heat-reception oil temperature THₒᵢₗ₁ or the lowering quantity of the pre-heat-exchange water temperature TH_{wat1} in the stop term Tₛₜₒₚ, and the initial temperature THₐ(ts-Δt) of the element A at the operation start point of time ts. That is, the initial temperature estimate function F2 need only represent a relationship defined in advance experimentally or by design between the stop-point-of-time temperature THₐ(te) and the temperature lowering quantity of at least one of the first temperature and the second temperature in the stop term Tₛₜₒₚ, and the initial temperature THₐ(ts-Δt) of the element A at the operation start point of time ts. The initial temperature estimate functions F1 and F2 may be maps representative of their respective relationships.

Although in the first to fourth embodiments, "internal temperature" of the present invention has been the magnet temperature TH_{mag}, this is not limitative. For example, "internal temperature" of the present invention may be another internal temperature of the electric motor MG for monitoring to avoid degradation in performance of the electric motor MG or may be another internal temperature of the electric motor MG for monitoring to effectively drive control the electric motor MG.

Although the first to fourth embodiments have included the initial temperature setting portion 100b that initially sets the temperature TH(m) of each element at the most-recent point of time m at the operation start point of time ts of the electric motor MG in case that the electric motor MG is switched from the stop state to the operation state, the present invention is not limited to this mode. For example, in case that the temperature TH of each element is repeatedly estimated using the thermal circuit also in the stop term Tₛₜₒₚ, the initial temperature setting portion 100b need not be included since there can be acquired the temperature TH(m) of each element estimated at the most-recent point of time m at the operation start point of time ts.

Although the first to fourth embodiments have been the mode where the cooling oil OIL is dripped from the cooling oil flow path 60 onto the coil ends 28e, the present invention is not limited to this mode. For example, they may be a mode where the cooling oil OIL before heat reception is injected with centrifugal force from a hollow portion disposed on the inner peripheral side of the rotor shaft 36 toward the coil ends 28e. In the case of this mode, the cooling oil OIL before heat reception cooled by cooling water with the oil cooler 52 is refluxed to the hollow portion of the rotor shaft 36 instead of the cooling oil flow path 60. That is, the present invention is applicable to the mode where cooling is effected by allowing the cooling oil OIL to come into direct contact with the coil 28 in the case 70.

The above are mere embodiments of the present invention, and the present invention can be carried out in modes variously altered or improved based on the knowledge of those skilled in the art without departing from the gist thereof.

### NOMENCLATURE OF ELEMENTS

22: stator core
28: coil
30: rotor
70: case
72: outside air
100: electronic control device (estimation device, control device)
100b: initial temperature setting portion
100c: heat generation quantity calculation portion
100d: heat transfer quantity calculation portion
100e: temperature change quantity calculation portion
100f: temperature estimate portion
100h: electric motor control portion
CL: axis
Cq: heat capacity
F1: initial temperature estimate function (first relationship)
F2: initial temperature estimate function (second relationship)
m: most-recent point of time
MG: electric motor
n: current point of time
Nmg: MG rotation number (rotation speed of electric motor)
OIL: cooling liquid (first cooling liquid)
Qg: heat generation quantity
Qt: heat transfer quantity
te: stop point of time
TH: (ts-Δt) : initial temperature
TH case: case temperature
THend: coil end temperature (temperature of coil)
THmag: magnet temperature (internal temperature)
THmag_j dg: judgment temperature (predetermined judgment temperature)
T Hoil1: pre-heat-reception oil temperature
   (temperature of the first cooling liquid before heat reception from the coil)
T Hoil2: post-heat-reception oil temperature
   (temperature of the first cooling liquid after heat reception from the coil)
T wat1: pre-heat-exchange water temperature
   (temperature of the second cooling liquid before heat reception from the first cooling liquid)
Tmg: MG torque (output torque of electric motor)
ts: operation start point of time
Tstop: stop term (term until the electric motor is switched from the stop state to the operation state).
WAT: cooling water (second cooling water)
Δt: predetermined term
ΔTH: temperature change quantity
ΔTHₒᵢₗ₂ : temperature lowering quantity
   (at least one of the temperature lowering quantity of the first oil temperature or the second oil temperature)

## Claims

1. A device for estimating an internal temperature (THmag) of an electric motor (MG), the electric motor (MG) having a stator core (22) extending cylindrically in a direction of an axis (CL) and around which a coil (28) is wound, a rotor arranged rotatably around the axis (CL), and a case (70) that houses the stator core (22) and the rotor (30), the coil (28) being cooled by a first cooling liquid (OIL) in the case (70),
the device estimating the internal temperature (THmag) by using a thermal circuit that regards a temperature (THoil2) of the first cooling liquid after heat reception from the coil (28) as a first temperature equal to a temperature (THcase) of the case (70), **characterized in that**
the internal temperature (THmag) is estimated using the thermal circuit with boundary conditions including the first temperature and a second temperature that is at least one of a temperature (THend) of the coil (28), a temperature (THoil1) of the first cooling liquid before heat reception from the coil, and a temperature (THwat1) of a second cooling liquid before heat reception from the first cooling liquid (OIL), the second cooling liquid cooling the first cooling liquid (OIL).

2. The device for estimating an internal temperature (THmag) of an electric motor (MG) of claim 1, wherein
the thermal circuit undergoes at least one of: simplification regarding the stator core (22) and the coil (28) as symmetrical with respect to a central portion of the stator core (22) in the axis (CL) direction; simplification regarding a temperature within the rotor (30) as uniform; simplification regarding a heat transfer via air within the case (70) as null between the rotor (30) and the first cooling liquid (OIL); and simplification regarding a heat transfer via air outside (72) the case (70) as null between the case (70) and outside air (72).

3. The device for estimating an internal temperature (THmag) of an electric motor (MG) of claim 1 or 2, comprising:
a heat generation quantity calculation portion (100c) that calculates a heat generation quantity (Qg) of each element in the thermal circuit, based on a rotation number (Nmg) of the electric motor (MG) and an output torque (Tmg) of the electric motor (MG) at an estimate point of time;
a heat transfer quantity calculation portion (100d) that calculates, using the thermal circuit, a heat transfer quantity (Qt) of the each element, based on the boundary conditions and a temperature of the each element at a most-recent point of time (m) that is a point of time anterior to the estimate point of time by a previously defined predetermined term;
a temperature change quantity calculation portion (100e) that calculates a temperature change quantity (ΔTH) of the each element in a term between the most-recent point of time (m) and the estimate point of time, based on the heat generation quantity (Qg) of the each element, the heat transfer quantity (Qt), and a previously defined heat capacity (Cq); and
a temperature estimate portion that estimates the internal temperature (THmag) at the estimate point of time, based on a temperature of the each element at the most-recent point of time (m) and the temperature change quantity (ΔTH) of the each element.

4. The device for estimating an internal temperature (THmag) of an electric motor (MG) of claim 3, comprising:
an initial temperature setting portion(100b) that, when the electric motor (MG) is switched from a stop state to an operation state, initially sets a temperature of the each element, based on a first relationship defined in advance experimentally or by design between a temperature of the each element at a stop point (te) of time at which the electric motor (MG) enters the stop state and a term until the electric motor is switched to the operation state from the stop state, and an initial temperature (TH(ts-Δt), THa(ts-Δt)) of the each element at an operation start point of time (ts) at which the electric motor (MG) is switched to the operation state.

5. The device for estimating an internal temperature (THmag) of an electric motor of claim 3, comprising:
an initial temperature setting portion that (100b), when the electric motor (MG) is switched from a stop state to an operation state, initially sets a temperature of the each element, based on a second relationship defined in advance experimentally or by design between a temperature of the each element at a stop point of time (te) at which the electric motor (MG) enters the stop state and a temperature lowering quantity of at least one of the first temperature and the second temperature in a term until the electric motor is switched to the operation state from the stop state, and an initial temperature (TH(ts-Δt), THa(ts-Δt)) of the each element at an operation start point (ts) of time at which the electric motor (MG) is switched to the operation state.

6. The device for estimating an internal temperature (THmag) of an electric motor (MG) of any of claims 1-5, the device (100) executing an output restriction of the electric motor (MG) in case that the internal temperature (THmag) of the electric motor (MG) estimated using the thermal circuit is greater than or equal to a previously defined predetermined judgment temperature (TH_{_jdg}).

7. A method for estimating an internal temperature (THmag) of an electric motor (MG), the electric motor having a stator core (22) extending cylindrically in a direction of an axis (CL) and around which a coil (28) is wound, a rotor arranged rotatably around the axis (CL), and a case (70) that houses the stator core (22) and the rotor (30), the coil (28) being cooled by a first cooling liquid (OIL) in the case (70), the method comprising:
estimating the internal temperature (THmag) by using a thermal circuit that regards a temperature (THoil) of the first cooling liquid after heat reception from the coil as a first temperature equal to a temperature (THcase) of the case (70), **characterized in that**
the internal temperature (THmag) is estimated using the thermal circuit with boundary conditions including the first temperature and a second temperature that is at least one of a temperature (THend) of the coil (28), a temperature (THoil1) of the first cooling liquid before heat reception from the coil, and a temperature (THwat1) of a second cooling liquid before heat reception from the first cooling liquid, the second cooling liquid cooling the first cooling liquid.

8. The method for estimating an internal temperature (THmag) of an electric motor of claim 7, wherein
the thermal circuit undergoes at least one of: simplification regarding the stator core (22) and the coil (28) as symmetrical with respect to a central portion of the stator core in the axis (CL) direction; simplification regarding a temperature within the rotor (30) as uniform; simplification regarding a heat transfer via air within the case (70) as null between the rotor (30) and the first cooling liquid (OIL); and simplification regarding a heat transfer via air outside the case (70) as null between the case and outside air (72).

9. The method for estimating an internal temperature (THmag) of an electric motor (MG) of claim 8, comprising:
calculating a heat generation quantity of each element in the thermal circuit, based on a rotation number (Nmg) of the electric motor (MG) and an output torque (Tmg) of the electric motor (MG) at an estimate point of time;
calculating, using the thermal circuit, a heat transfer quantity (Qt) of the each element, based on the boundary conditions and a temperature of the each element at a most-recent point of time (m) that is a point of time anterior to the estimate point of time by a previously defined predetermined term;
calculating a temperature change quantity (ΔTH) of the each element in a term between the most-recent point of time (m) and the estimate point of time, based on the heat generation quantity (Qg) of the each element, the heat transfer quantity (Qt), and a previously defined heat capacity (Cq); and
estimating the internal temperature (THmag) at the estimate point of time, based on a temperature of the each element at the most-recent point of time (m) and the temperature change quantity (ΔTH) of the each element.

## Patentansprüche

1. Vorrichtung zum Schätzen einer Innentemperatur (THmag) eines Elektromotors (MG), wobei der Elektromotor (MG) einen Statorkern (22), der sich zylinderförmig in einer Richtung einer Achse (CL) erstreckt und um den eine Spule (28) gewickelt ist, einen Rotor, der drehbar um die Achse (CL) angeordnet ist, und ein Gehäuse (70) aufweist, das den Statorkern (22) und den Rotor (30) beherbergt, wobei die Spule (28) durch eine erste Kühlflüssigkeit (OIL) in dem Gehäuse (70) gekühlt wird,
wobei die Vorrichtung die Innentemperatur (THmag) unter Verwendung eines Wärmekreislaufs schätzt, der eine Temperatur (THoil2) der ersten Kühlflüssigkeit nach Wärmeaufnahme von der Spule (28) als eine erste Temperatur betrachtet, die gleich einer Temperatur (THcase) des Gehäuses (70) ist,
**dadurch gekennzeichnet, dass**
die Innentemperatur (THmag) unter Verwendung des Wärmekreislaufs mit Grenzbedingungen geschätzt wird, die die erste Temperatur und eine zweite Temperatur beinhalten, die mindestens eine von einer Temperatur (THend) der Spule (28), einer Temperatur (THoil1) der ersten Kühlflüssigkeit vor der Wärmeaufnahme von der Spule und einer Temperatur (THwat1) einer zweiten Kühlflüssigkeit vor der Wärmeaufnahme von der ersten Kühlflüssigkeit (OIL) ist, wobei die zweite Kühlflüssigkeit die erste Kühlflüssigkeit (OIL) kühlt.

2. Vorrichtung zum Schätzen einer Innentemperatur (THmag) eines Elektromotors (MG) nach Anspruch 1, wobei der Wärmekreislauf mindestens eines des Folgenden durchläuft: eine Vereinfachung durch Betrachten des Statorkerns (22) und der Spule (28) als symmetrisch in Bezug auf einen zentralen Abschnitt des Statorkerns (22) in Richtung der Achse (CL); eine Vereinfachung durch Betrachten einer Temperatur in dem Rotor (30) als gleichmäßig; eine Vereinfachung durch Betrachten einer Wärmeübertragung über Luft in dem Gehäuse (70) zwischen dem Rotor (30) und der ersten Kühlflüssigkeit (OIL) als null; und eine Vereinfachung durch Betrachten einer Wärmeübertragung über Luft (72) außerhalb des Gehäuses (70) zwischen dem Gehäuse (70) und der Außenluft (72) als null.

3. Vorrichtung zum Schätzen einer Innentemperatur (THmag) eines Elektromotors (MG) nach Anspruch 1 oder 2, umfassend:
einen Abschnitt (100c) zum Berechnen des Wärmeerzeugungsumfangs, der basierend auf einer Drehzahl (Nmg) des Elektromotors (MG) und einem Ausgabedrehmoment (Tmg) des Elektromotors (MG) zu einem Schätzungszeitpunkt einen Wärmeerzeugungsumfang (Qg) jedes Elements in dem Wärmekreislauf berechnet;
einen Abschnitt (100d) zum Berechnen des Wärmeübertragungsumfangs, der unter Verwendung des Wärmekreislaufs basierend auf den Grenzbedingungen und einer Temperatur jedes Elements zu einem jüngsten Zeitpunkt (m), der ein Zeitpunkt ist, der um eine zuvor definierte festgelegte Zeit vor dem Schätzzeitpunkt liegt, einen Wärmeübertragungsumfang (Qt) jedes Elements berechnet;
einen Abschnitt (100e) zum Berechnen des Temperaturveränderungsumfangs, der basierend auf dem Wärmeerzeugungsumfang (Qg) jedes Elements, dem Wärmeübertragungsumfang (Qt) und einer zuvor definierten Wärmekapazität (Cq) einen Temperaturveränderungsumfang (ΔTH) jedes Elements in einer Zeit zwischen dem jüngsten Zeitpunkt (m) und dem Schätzzeitpunkt berechnet; und
einen Abschnitt zum Schätzen der Temperatur, der basierend auf einer Temperatur jedes Elements zu dem jüngsten Zeitpunkt (m) und dem Temperaturveränderungsumfang (ΔTH) jedes Elements die Innentemperatur (THmag) zu dem Schätzzeitpunkt berechnet.

4. Vorrichtung zum Schätzen einer Innentemperatur (THmag) eines Elektromotors (MG) nach Anspruch 3, umfassend:
einen Abschnitt (100b) zum Einstellen der Anfangstemperatur, der, wenn der Elektromotor (MG) von einem Stoppzustand in einen Betriebszustand versetzt wird, anfänglich eine Temperatur jedes Elements einstellt, basierend auf einem ersten Verhältnis, das im Vorhinein experimentell oder durch Gestaltung zwischen einer Temperatur jedes Elements zu einem Stoppzeitpunkt (te), zu dem der Elektromotor (MG) in den Stoppzustand eintritt, und einer Zeit, bis der Elektromotor von dem Stoppzustand in den Betriebszustand versetzt wird, und einer Anfangstemperatur TH(ts-Δt), THa(ts-Δt)) jedes Elements zu einem Zeitpunkt (ts) des Betriebsstarts, zu dem der Elektromotor (MG) in den Betriebszustand versetzt wird, definiert wird.

5. Vorrichtung zum Schätzen einer Innentemperatur (THmag) eines Elektromotors nach Anspruch 3, umfassend: einen Abschnitt (100b) zum Einstellen der Anfangstemperatur, der, wenn der Elektromotor (MG) von einem Stoppzustand in einen Betriebszustand versetzt wird, anfänglich eine Temperatur jedes Elements einstellt, basierend auf einem zweiten Verhältnis, das im Vorhinein experimentell oder durch Gestaltung zwischen einer Temperatur jedes Elements zu einem Stoppzeitpunkt (te), zu dem der Elektromotor (MG) in den Stoppzustand eintritt, und einem Temperatursenkungsumfang von mindestens einem von der ersten Temperatur und der zweiten Temperatur in einer Zeit, bis der Elektromotor von dem Stoppzustand in den Betriebszustand versetzt wird, und einer Anfangstemperatur TH(ts-Δt), THa(ts-Δt)) jedes Elements zu einem Zeitpunkt (ts) des Betriebsstarts, zu dem der Elektromotor (MG) in den Betriebszustand versetzt wird, definiert wird.

6. Vorrichtung zum Schätzen einer Innentemperatur (THmag) eines Elektromotors (MG) nach einem der Ansprüche 1 bis 5, wobei die Vorrichtung (100) eine Ausgabebeschränkung des Elektromotors (MG) ausführt, wenn die Innentemperatur (THmag) des Elektromotors (MG), die unter Verwendung des Wärmekreislaufs geschätzt wird, größer als oder gleich einer zuvor definierten festgelegten Bewertungstemperatur (TH_{_jdg}) ist.

7. Verfahren zum Schätzen einer Innentemperatur (THmag) eines Elektromotors (MG), wobei der Elektromotor einen Statorkern (22), der sich zylinderförmig in einer Richtung einer Achse (CL) erstreckt und um den eine Spule (28) gewickelt ist, einen Rotor, der drehbar um die Achse (CL) angeordnet ist, und ein Gehäuse (70) aufweist, das den Statorkern (22) und den Rotor (30) beherbergt, wobei die Spule (28) durch eine erste Kühlflüssigkeit (OIL) in dem Gehäuse (70) gekühlt wird, wobei das Verfahren Folgendes umfasst:
Schätzen der Innentemperatur (THmag) unter Verwendung eines Wärmekreislaufs, der eine Temperatur (THoil) der ersten Kühlflüssigkeit nach Wärmeaufnahme von der Spule als eine erste Temperatur betrachtet, die gleich einer Temperatur (THcase) des Gehäuses (70) ist,
**dadurch gekennzeichnet, dass**
die Innentemperatur (THmag) unter Verwendung des Wärmekreislaufs mit Grenzbedingungen geschätzt wird, die die erste Temperatur und eine zweite Temperatur beinhalten, die mindestens eine von einer Temperatur (THend) der Spule (28), einer Temperatur (THoil1) der ersten Kühlflüssigkeit vor der Wärmeaufnahme von der Spule und einer Temperatur (THwat1) einer zweiten Kühlflüssigkeit vor der Wärmeaufnahme von der ersten Kühlflüssigkeit ist, wobei die zweite Kühlflüssigkeit die erste Kühlflüssigkeit kühlt.

8. Verfahren zum Schätzen einer Innentemperatur (THmag) eines Elektromotors (MG) nach Anspruch 7, wobei der Wärmekreislauf mindestens eines des Folgenden durchläuft: eine Vereinfachung durch Betrachten des Statorkerns (22) und der Spule (28) als symmetrisch in Bezug auf einen zentralen Abschnitt des Statorkerns in Richtung der Achse (CL); eine Vereinfachung durch Betrachten einer Temperatur in dem Rotor (30) als gleichmäßig; eine Vereinfachung durch Betrachten einer Wärmeübertragung über Luft in dem Gehäuse (70) zwischen dem Rotor (30) und der ersten Kühlflüssigkeit (OIL) als null; und eine Vereinfachung durch Betrachten einer Wärmeübertragung über Luft außerhalb des Gehäuses (70) zwischen dem Gehäuse und der Außenluft (72) als null.

9. Verfahren zum Schätzen einer Innentemperatur (THmag) eines Elektromotors (MG) nach Anspruch 8, umfassend:
Berechnen eines Wärmeerzeugungsumfangs jedes Elements in dem Wärmekreislauf, basierend auf einer Drehzahl (Nmg) des Elektromotors (MG) und einem Ausgabedrehmoment (Tmg) des Elektromotors (G) zu einem Schätzungszeitpunkt;
Berechnen eines Wärmeübertragungsumfangs (Qt) jedes Elements unter Verwendung des Wärmekreislaufs, basierend auf den Grenzbedingungen und einer Temperatur jedes Elements zu einem jüngsten Zeitpunkt (m), der ein Zeitpunkt ist, der um eine zuvor definierte festgelegte Zeit vor dem Schätzzeitpunkt liegt;
Berechnen eines Temperaturveränderungsumfangs (ΔTH) jedes Elements in einer Zeit zwischen dem jüngsten Zeitpunkt (m) und dem Schätzzeitpunkt, basierend auf dem Wärmeerzeugungsumfang (Qg) jedes Elements, dem Wärmeübertragungsumfang (Qt) und einer zuvor definierten Wärmekapazität (Cq); und
Schätzen der Innentemperatur (THmag) zu dem Schätzzeitpunkt, basierend auf einer Temperatur jedes Elements zu dem jüngsten Zeitpunkt (m) und dem Temperaturveränderungsumfang (ΔTH) jedes Elements.

## Revendications

1. Dispositif d'estimation d'une température interne (THmag) d'un moteur électrique (MG), le moteur électrique (MG) étant pourvu d'un noyau statorique (22) s'étendant de manière cylindrique dans la direction d'un axe (CL) et autour duquel est enroulée une bobine (28), d'un rotor agencé rotatif autour de l'axe (CL), et d'un carter (70) accueillant le noyau statorique (22) et le rotor (30), la bobine (28) étant refroidie par un premier liquide de refroidissement (OIL) dans le carter (70),
le dispositif estimant la température interne (THmag) au moyen d'un circuit thermique qui considère une température (THoil2) du premier liquide de refroidissement après réception de chaleur en provenance de la bobine (28) comme une première température égale à une température (THcase) du carter (70),
**caractérisé en ce que**
la température interne (THmag) est estimée au moyen du circuit thermique avec des conditions aux limites comportant la première température et une deuxième température qui est au moins l'une d'une température (THend) de la bobine (28), d'une température (THoil1) du premier liquide de refroidissement avant réception de chaleur en provenance de la bobine, et d'une température (THwat1) d'un deuxième liquide de refroidissement avant réception de chaleur en provenance du premier liquide de refroidissement (OIL), le deuxième liquide de refroidissement refroidissant le premier liquide de refroidissement (OIL).

2. Dispositif d'estimation d'une température interne (THmag) d'un moteur électrique (MG) selon la revendication 1, dans lequel
le circuit thermique fait l'objet d'au moins une des simplifications suivantes : une simplification considérant le noyau statorique (22) et la bobine (28) comme symétriques par rapport à une partie centrale du noyau statorique (22) dans la direction de l'axe (CL) ; une simplification considérant la température à l'intérieur du rotor (30) comme uniforme ; une simplification considérant un transfert thermique par l'air à l'intérieur du carter (70) comme nul entre le rotor (30) et le premier liquide de refroidissement (OIL) ; et une simplification considérant un transfert thermique par l'air à l'extérieur (72) du carter (70) comme nul entre le carter (70) et l'air extérieur (72).

3. Dispositif d'estimation d'une température interne (THmag) d'un moteur électrique (MG) selon la revendication 1 ou 2, comprenant :
une unité de calcul de quantité de chaleur générée (100c) qui calcule une quantité de chaleur générée (Qg) de chaque élément dans le circuit thermique, sur la base d'une vitesse de rotation (Nmg) du moteur électrique (MG) et d'un couple de sortie (Tmg) du moteur électrique (MG) à un instant d'estimation donné ;
une unité de calcul de quantité de transfert thermique (100d) qui calcule, au moyen du circuit thermique, une quantité de transfert thermique (Qt) dudit élément, sur la base des conditions aux limites et d'une température dudit élément à un instant le plus récent (m), qui est un instant antérieur à l'instant d'estimation d'un intervalle de temps prédéterminé précédemment défini ;
une unité de calcul de quantité de variation de température (100e) qui calcule une quantité de variation de température (ΔTH) dudit élément dans un intervalle de temps entre l'instant le plus récent (m) et l'instant d'estimation, sur la base de la quantité de chaleur générée (Qg) dudit élément, de la quantité de transfert thermique (Qt), et d'une capacité calorifique (Cq) précédemment définie ; et
une unité d'estimation de température qui estime la température interne (THmag) à l'instant d'estimation, sur la base d'une température dudit élément à l'instant le plus récent (m) et de la quantité de variation de température (ΔTH) dudit élément.

4. Dispositif d'estimation d'une température interne (THmag) d'un moteur électrique (MG) selon la revendication 3, comprenant :
une unité de réglage de température initiale (100b) qui, lorsque le moteur électrique (MG) passe d'un état d'arrêt à un état de marche, règle initialement une température dudit élément, sur la base d'une première relation définie au préalable de manière expérimentale ou par conception entre une température dudit élément à un instant d'arrêt (te) auquel le moteur électrique (MG) adopte l'état d'arrêt et un intervalle de temps jusqu'à ce que le moteur électrique passe de l'état d'arrêt à l'état de marche, et une température initiale (TH(ts-Δt), THa(ts-Δt)) dudit élément à un instant de début de marche (ts) auquel le moteur électrique (MG) passe à l'état de marche.

5. Dispositif d'estimation d'une température interne (THmag) d'un moteur électrique (MG) selon la revendication 3, comprenant :
une unité de réglage de température initiale (100b) qui, lorsque le moteur électrique (MG) passe d'un état d'arrêt à un état de marche, règle initialement une température dudit élément, sur la base d'une deuxième relation définie au préalable de manière expérimentale ou par conception entre une température dudit élément à un instant d'arrêt (te) auquel le moteur électrique (MG) adopte l'état d'arrêt et une quantité de baisse de température de la première température et/ou de la deuxième température dans un intervalle de temps jusqu'à ce que le moteur électrique passe de l'état d'arrêt à l'état de marche, et une température initiale (TH(ts-Δt), THa(ts-Δt)) dudit élément à un instant de début de marche (ts) auquel le moteur électrique (MG) passe à l'état de marche.

6. Dispositif d'estimation d'une température interne (THmag) d'un moteur électrique (MG) selon l'une quelconque des revendications 1 à 5, le dispositif (100) exécutant une limitation de la sortie du moteur électrique (MG) dans le cas où la température interne (THmag) du moteur électrique (MG) estimée au moyen du circuit thermique est supérieure ou égale à une température de décision prédéterminée précédemment définie (TH_{_jdg}).

7. Procédé d'estimation d'une température interne (THmag) d'un moteur électrique (MG), le moteur électrique (MG) étant pourvu d'un noyau statorique (22) s'étendant de manière cylindrique dans la direction d'un axe (CL) et autour duquel est enroulée une bobine (28), d'un rotor agencé rotatif autour de l'axe (CL), et d'un carter (70) accueillant le noyau statorique (22) et le rotor (30), la bobine (28) étant refroidie par un premier liquide de refroidissement (OIL) dans le carter (70), le procédé comprenant :
l'estimation de la température interne (THmag) au moyen d'un circuit thermique qui considère une température (THoil) du premier liquide de refroidissement après réception de chaleur en provenance de la bobine comme une première température égale à une température (THcase) du carter (70),
**caractérisé en ce que**
la température interne (THmag) est estimée au moyen du circuit thermique avec des conditions aux limites comportant la première température et une deuxième température qui est au moins l'une d'une température (THend) de la bobine (28), d'une température (THoil1) du premier liquide de refroidissement avant réception de chaleur en provenance de la bobine, et d'une température (THwat1) d'un deuxième liquide de refroidissement avant réception de chaleur en provenance du premier liquide de refroidissement, le deuxième liquide de refroidissement refroidissant le premier liquide de refroidissement.

8. Procédé d'estimation d'une température interne (THmag) d'un moteur électrique (MG) selon la revendication 7, dans lequel
le circuit thermique fait l'objet d'au moins une des simplifications suivantes : une simplification considérant le noyau statorique (22) et la bobine (28) comme symétriques par rapport à une partie centrale du noyau statorique dans la direction de l'axe (CL) ; une simplification considérant la température à l'intérieur du rotor (30) comme uniforme ; une simplification considérant un transfert thermique par l'air à l'intérieur du carter (70) comme nul entre le rotor (30) et le premier liquide de refroidissement (OIL) ; et une simplification considérant un transfert thermique par l'air à l'extérieur du carter (70) comme nul entre le carter et l'air extérieur (72).

9. Procédé d'estimation d'une température interne (THmag) d'un moteur électrique (MG) selon la revendication 8, comprenant :
le calcul d'une quantité de chaleur générée de chaque élément dans le circuit thermique, sur la base d'une vitesse de rotation (Nmg) du moteur électrique (MG) et d'un couple de sortie (Tmg) du moteur électrique (MG) à un instant d'estimation donné ;
le calcul, au moyen du circuit thermique, d'une quantité de transfert thermique (Qt) dudit élément, sur la base des conditions aux limites et d'une température dudit élément à un instant le plus récent (m), qui est un instant antérieur à l'instant d'estimation d'un intervalle de temps prédéterminé précédemment défini ;
le calcul d'une quantité de variation de température (ΔTH) dudit élément dans un intervalle de temps entre l'instant le plus récent (m) et l'instant d'estimation, sur la base de la quantité de chaleur générée (Qg) dudit élément, de la quantité de transfert thermique (Qt), et d'une capacité calorifique (Cq) précédemment définie ; et
l'estimation de la température interne (THmag) à l'instant d'estimation, sur la base d'une température dudit élément à l'instant le plus récent (m) et de la quantité de variation de température (ΔTH) dudit élément.
